(19) Europäisches Patentamt
European Patent Office
Office européen des brevets

(11) **EP 2 030 093 B1**

(12) **FASCICULE DE BREVET EUROPEEN**

(45) Date de publication et mention de la délivrance du brevet:
**08.08.2012   Bulletin 2012/32**

(21) Numéro de dépôt: **07765961.3**

(22) Date de dépôt: **29.05.2007**

(51) Int Cl.:
**G05D 11/13** *(2006.01)*

(86) Numéro de dépôt international:
**PCT/FR2007/000886**

(87) Numéro de publication internationale:
**WO 2007/138185 (06.12.2007 Gazette 2007/49)**

(54) **PROCEDE ET DISPOSITIF DE CONTROLE DE L'ELABORATION D'UN MELANGE DE CONSTITUANTS, NOTAMMENT D'UN MELANGE AVEC VOLUMES MORTS DE PRE-MELANGE**

VERFAHREN UND VORRICHTUNG ZUR STEUERUNG DER HERSTELLUNG EINER KOMPONENTENMISCHUNG, IM BESONDEREN EINER MISCHUNG MIT VORGEMISCHTEN TOTVOLUMEN

METHOD AND DEVICE FOR CONTROLLING PRODUCTION OF A MIXTURE OF COMPONENTS, IN PARTICULAR A MIXTURE WITH PRE-MIX DEAD VOLUMES

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité:  **31.05.2006   FR 0604868**

(43) Date de publication de la demande:
**04.03.2009   Bulletin 2009/10**

(73) Titulaire: **TOTAL RAFFINAGE MARKETING**
**92800 Puteaux (FR)**

(72) Inventeurs:
• **BERNIER, Michel**
**F-56710 Quiberon (FR)**
• **PETIT, Nicolas**
**F-92330 Sceaux (FR)**
• **CREFF, Yann**
**F-38138 Les Cotes d'Arey (FR)**
• **CHEBRE, Mériam**
**F-38780 Septeme (FR)**

(74) Mandataire: **Roger, Walter et al**
**Cabinet Jolly**
**54, rue de Clichy**
**75009 Paris (FR)**

(56) Documents cités:
FR-A1- 2 845 013     US-A- 3 385 680
US-A1- 3 473 008     US-A1- 5 430 295
US-A1- 6 159 255

**Description**

L'invention concerne un procédé et un dispositif de contrôle de l'élaboration d'un mélange de constituants, notamment d'un mélange avec volumes morts de pré-mélange.

Elle s'applique plus particulièrement à la régulation automatique des mélanges de constituants en ligne, tels que par exemple des mélanges de produits pétroliers, dans lesquels les mélanges élaborés sont conformes à un ensemble de spécifications ou de paramètres significatifs. Dans ces applications, chaque produit contenu dans le mélange agit sur l'ensemble des caractéristiques ou des paramètres du mélange final obtenu.

L'invention s'applique notamment à l'élaboration de mélanges dans lesquels les caractéristiques ou les paramètres des différents constituants sont mal connus ou peuvent évoluer pendant l'élaboration du mélange. Les mélanges de produits pétroliers en particulier, présentent ces aspects, mais le procédé et le dispositif de l'invention peuvent s'appliquer à des mélanges de produits tels que les ciments, les peintures, etc...

Dans tous les cas, il s'agit d'obtenir un mélange ayant un état ou présentant des paramètres de constitution définis à l'avance. Ces paramètres concernent les caractéristiques physico-chimiques des mélanges à obtenir. Pour un mélange de produits pétroliers, par exemple, ces paramètres pourront être la teneur en soufre du mélange, son indice d'octane, etc... Pour un mélange de ciments, les paramètres seront par exemple, la teneur en chaux, le module silicique, le module alumino-ferrique, etc...

Le document US 6 159 255 A1 décrit un dispositif et un procédé pour contrôler un mélange dans lequel on réalise des mesures sur le mélange pour en déterminer les principales caractéristiques. Ces mesures permettent de déterminer des coefficients permettant d'estimer une propriété intrinsèque du mélange de constituants.

Les documents US 5 430 295 A1 et US 3 473 008 A1 décrivent des procédés pour contrôler les caractéristiques d'un mélange consistant à faire varier les proportions de chaque constituant en fonction des propriétés mesurées du mélange obtenu.

Le document US 3 385 680 A décrit un procédé et un dispositif de contrôle des caractéristiques d'un mélange prenant en compte les caractéristiques des constituants par mesure directe de ces dernières.

Les procédés et dispositifs connus dans l'état de la technique permettent d'élaborer un mélange en ligne ou en boucle fermée, c'est-à-dire avec une rétroaction à partir d'informations mesurées en temps réel, en continu ou périodiquement, à partir d'appareils de mesure (analyseurs en ligne) disposés en aval de l'installation de mélange (mélangeuse). Ces procédés et dispositifs s'appliquent généralement sur des flux de constituants provenant de bacs de produits intermédiaires.

Une rétroaction typique utilise l'écart entre une consigne cible et la mesure. Il s'agit d'une rétroaction par retour de sortie.

Une autre rétroaction typique consiste à corriger les prédictions des caractéristiques ou paramètres du mélange, en leur ajoutant un terme qui est le résultat d'un filtrage au premier ordre de la différence entre la mesure et la prédiction sans correction.

Ces rétroactions typiques présentent l'inconvénient de s'appliquer sur le mélange en sortie mélangeuse, et non sur les caractéristiques des constituants en amont de la mélangeuse.

Les régulations utilisées prennent généralement en compte des contraintes de qualité de mélange à fabriquer, ainsi que des contraintes liées aux voies d'alimentation en constituants (par exemple, limites liées aux contraintes hydrauliques telles que le dimensionnement des pompes, contraintes d'homogénéité sur les proportions calculées, dont la somme doit être égale à 1 sur l'ensemble des voies). Elles permettent également de piloter le débit total de production de mélange.

Les dispositifs et procédés connus présentent l'inconvénient d'assurer la tenue des différentes spécifications du mélange en fonction de propriétés de mélange intégrées (cumulées ou moyennées en volume) dans un bac de destination du mélange situé immédiatement en aval de la mélangeuse. La mesure des propriétés du mélange est en effet effectuée en général sur le mélange instantané en sortie de mélangeuse, en amont du bac de destination du mélange, ces mesures permettant d'obtenir une estimation de la qualité intégrée (coulée sortie mélangeuse ou dans le bac) qui est l'objet de la régulation en mode intégré mélange ou intégré sur bac (la définition de ces modes est donnée plus loin).

Si ces procédés et dispositifs fonctionnant en mesure intégrée sont bien adaptés à des aires de mélange traditionnelles, avec des bacs de constituants, en coulée-vidange éventuelle, et un bac de destination du mélange, ils sont insuffisants pour un fonctionnement avec un flux continu direct en amont des constituants, et éventuellement, une expédition directe en continu du mélange élaboré, sans passage par un bac de destination.

Ils sont en effet dépendants des qualités des constituants, qui peuvent varier, notamment lors d'un flux amont continu des constituants.

Par ailleurs, dans une configuration de flux aval continu direct du mélange, les proportions des constituants du mélange obtenu par les dispositifs connus sont corrigées en tenant compte du volume de mélange présent dans le bac de destination. Ainsi, au cours de l'élaboration d'un volume donné de mélange dans le bac de destination, les

EP 2 030 093 B1

propriétés du mélange sont susceptibles de varier fortement, ce qui ne serait pas acceptable pour une expédition directe en continu du mélange.

Un autre inconvénient des dispositifs et procédés connus est qu'ils gèrent difficilement les infaisables par solution de compromis optimal. C'est-à-dire, lorsqu'une ou plusieurs contraintes ne peuvent être respectées, la solution obtenue conduit à un mélange dont on ne maîtrise pas correctement l'écart aux spécifications requises.

Les procédés de rétroaction traditionnels sont également insuffisants pour gérer une synchronisation des installations comprenant des pré-mélanges de constituants en amont, en particulier en cas de pré-mélanges multiples en série et/ou en parallèle. De tels pré-mélanges engendrent en effet un retard sur les flux de certains constituants qui nécessitent l'utilisation de marges de fabrication importantes afin de respecter les spécifications du mélange dans le bac de destination, mais qui induisent une sur qualité non nécessaire et coûteuse. En outre, ce défaut de synchronisation peut conduire à des pompages (oscillations) entraînait une sollicitation abusive des organes de commande pouvant conduire à leur usure prématurée.

Enfin, les procédés et dispositifs connus régulent généralement de façon indépendante d'une part la proportion des constituants, d'autre part l'injection d'additifs pour régler de façon découplée les spécifications du mélange. Cette indépendance de régulation ne permet pas d'économiser des injections coûteuses d'additifs.

Les procédés et dispositifs connus assurent également le pilotage du débit total de mélangeuse, en prenant en compte des contraintes de limite haute et basse, liées à des limitations hydrauliques (dimensionnement des pompes sur les voies choisies en amont et aval de mélangeuse) ainsi qu'à des limitations économiques (contraintes d'ordonnancement), et permettent notamment de maximiser le débit pour raccourcir les temps de fabrication, tout en réduisant automatiquement l'allure dans le cas d'une contrainte active d'applicabilité de la recette calculée.

L'objectif de la présente invention est de proposer un procédé de contrôle de l'élaboration d'un mélange, et un dispositif correspondant, remédiant à ces inconvénients.

Notamment, le procédé de contrôle selon l'invention assure une rétroaction de régulation multi variable par un observateur dynamique permettant une estimation en temps réel des propriétés des constituants du mélange, suffisante pour garantir l'efficacité de la boucle de rétroaction. Ainsi, les propriétés désirées du mélange sont garanties malgré des incertitudes importantes sur les propriétés des constituants d'une part, et une connaissance partielle du processus de mélange d'autre part.

A cet effet, un premier objet de l'invention concerne un procédé de contrôle de l'élaboration d'un mélange M de n constituants, le procédé permettant de déterminer les proportions u des constituants entrant dans le mélange de manière à obtenir un nombre m de propriétés prédéterminées y du mélange dont les valeurs sont comprises entre des seuils minima et maxima prédéterminés et/ou sont sensiblement égales, pour $m'$ d'entre elles ($m' \leq n\text{-}1$), à des valeurs cibles prédéterminées, caractérisé en ce qu'il comprend les étapes suivantes :

    (i) à un instant t=O,

        (1) on détermine une matrice B représentant un nombre m de propriétés y des n constituants;
        (2) on détermine une recette de référence $\overline{u}$ à partir des seuils minima et maxima prédéterminés et/ou des valeurs cibles prédéterminées, telles que les propriétés $B\overline{u}$ du mélange soient comprises entre lesdits seuils prédéterminés, et/ou pour m' d'entre elles, égales aux dites valeurs cibles prédéterminées ; $\overline{u}$, étant un vecteur de dimension n, représentant les proportions des différents constituants entrant dans la composition du mélange,

        avec $\displaystyle\sum_{i=1}^{n} \overline{u}_i = 1$ ;

        (3) on applique la recette $\overline{u}$ aux constituants afin d'élaborer un mélange M ;

    (ii) à l'instant t' = t+Δt,

        (1) on mesure les propriétés y mes du mélange M obtenu en appliquant la recette calculée à l'instant précédent,
        (2) on en déduit une matrice corrigée $\hat{B}$ représentant l'estimée des propriétés des constituants,
        (3) on détermine une nouvelle recette u, de sorte que les propriétés $\hat{B}u$ du mélange soient comprises entre lesdits seuils prédéterminés, et/ou pour m' d'entre elles, égales aux dites valeurs cibles prédéterminées,
        (4) on applique cette nouvelle recette u aux constituants,

    (iii) à l'instant t" = t'+Δt, on réitère les opérations (1) à (4) de l'étape (ii) précédente;
    (iv) l'étape (iii) est réitérée pendant toute la durée de l'élaboration du mélange.

Ainsi, à l'instant initial t=0, une matrice B est déterminée, par exemple à partir des données fournies par les fabricants des constituants, ou de mesures de laboratoires, puis mise à jour au fur et à mesure de l'élaboration du mélange.

3

On notera que les seuils minima et maxima prédéterminés, ainsi que les valeurs cibles prédéterminées, peuvent être modifiées au cours du mélange.

Ce procédé présente l'avantage de réactualiser l'estimation des propriétés des constituants, ce qui permet de tenir compte des variations de leurs propriétés au cours du temps afin de maintenir les spécifications souhaitées du mélange. Cette approche originale permet de s'affranchir des imprécisions et incertitudes des propriétés des constituants dues aux erreurs de mesure, aux défauts/pollutions, à une homogénéisation incomplète ou à une stratification des bacs, à la variabilité dans le temps des différents constituants. Ce procédé peut ainsi être utilisé avantageusement dans des installations avec un flux continu direct en amont des constituants.

Avantageusement, les propriétés y mes du mélange mesurées au cours de l'opération (1) de l'étape (ii) sont mesurées au moyen d'un processus continu de mesure sur le mélange élaboré. Par processus continu de mesure, on entend soit une mesure effectuée en continu lorsque sa nature le permet, soit une succession de prélèvements d'échantillon et de mesures de ces échantillons.

Ces mesures instantanées sur le mélange, dès sa formation, permettent d'utiliser le procédé pour une installation dont le mélange est distribué directement en continu. Le procédé est alors en mode instantané.

Le procédé selon l'invention présente l'avantage de pouvoir fonctionner en mode intégré, les mesures pouvant alors être cumulées ou moyennées en volume dans un bac de destination du mélange. On peut également prévoir de basculer du mode intégré au mode instantané (ou l'inverse) en cours d'élaboration du mélange.

Par exemple, ce basculement peut être réalisé manuellement par un opérateur afin de modifier en cours de mélange le mode de régulation requis.

Le basculement peut également être effectué automatiquement, sur séquence, par exemple en fin de mélange, au bout d'un volume écoulé atteint, et en tenant compte du volume restant à fabriquer. Cette configuration est utilisée notamment pour garantir une expédition directe par oléoduc, ou encore pour garantir la qualité de la totalité du produit résiduel sur les lignes, dans le cas de volumes de lignes importants entre une mélangeuse et un bac de stockage de produits fini situé sur une aire de stockage éloignée.

Avantageusement, à un instant prédéterminé au cours de l'élaboration du mélange, on mesure une ou plusieurs propriétés des constituants et l'on met à jour la matrice B représentant les propriétés des constituants. Il est ainsi possible, sans nécessiter de réinitialiser le procédé, de mettre à jour par une mesure une ou plusieurs propriétés d'un constituant, ce qui permet d'améliorer l'estimation de la ou des propriétés de ce constituant. La vitesse de mise à jour peut être réglable propriété par propriété pour chaque constituant.

De préférence, au cours de l'opération (2) de l'étape (ii), la matrice corrigée $\hat{B}$ est déterminée en utilisant l'équation suivante :

$$\frac{d\hat{B}_j^t}{dt} \; = \; -\beta_j Hu(y_j \; - \; y_j^{mes}), \quad (1)$$

Où

- la matrice H est une matrice symétrique définie positive ayant pour objectif d'assurer une normalisation de prise en compte de l'écart mesure-prédiction permettant le calcul d'écart de prédiction de qualité des constituants,

- $B_j^t$ est la transposée de Bj,

- $\beta_j$, réel strictement positif, est une constante de réglage du temps de convergence permettant de différencier la rapidité de convergence de l'estimation, propriété par propriété.

Cette constante βj permet de différencier la rapidité de convergence de l'estimation, propriété par propriété, et notamment, permet de pouvoir prendre en compte les spécificités de retard de mesure propre à chaque propriété.

A titre d'exemples de réglages de βj, on pourra prendre des valeurs égales à deux à quatre fois le retard pur.

Par exemple, pour une propriété comme l'indice d'octane, associée à un retard de mesure de 10 minutes, β sera réglée à 20 minutes.

Pour une propriété comme le pourcent distillé à 70°C, associée à un retard de mesure de 40 minutes (chromatographe en ligne), on pourra régler β à 80 minutes.

Différents choix de matrice H, qui restera symétrique et définie positive, sont possibles pour assurer la convergence d'un tel système.

On peut par exemple utiliser la matrice H suivante, qui introduit un facteur de normalisation basé sur la recette initiale de référence :

$$\frac{1}{\|\bar{u}\|} \begin{pmatrix} \frac{1}{\bar{u}_1} & & \\ & \ddots & \\ & & \frac{1}{\bar{u}_n} \end{pmatrix}$$

La normalisation effectuée par la matrice H est particulièrement importante pour s'affranchir des effets d'échelles physiques d'une propriété à l'autre, et des sensibilités de variation différentes spécifiques à chaque propriété.

Cette normalisation permet ensuite de mieux moduler les écarts de prédiction calculés (après s'être affranchi des effets d'échelle), cette modulation pouvant se faire, par exemple, de façon proportionnelle à un terme lié à la recette courante, ramené à une recette de référence.

De préférence, le procédé de contrôle selon l'invention pour l'élaboration d'un mélange de constituants, dans lequel au moins un pré-mélange d'au moins deux des constituants est réalisé avant la préparation du mélange, est caractérisé en ce que la recette u déterminée au cours de l'opération (3) de l'étape (ii) prend en compte les retards dus aux volumes morts présents dans l'installation au niveau des zones de pré-mélange.

Une telle synchronisation permet d'améliorer l'élaboration du mélange et le respect des consignes de propriétés du mélange. Elle permet également de réduire les marges de fabrication, et ainsi de contrôler plus précisément les flux de constituants, et d'éviter la sur qualité. Enfin, ce contrôle plus précis des flux de constituants limite les pompages, et par là même une sollicitation abusive des organes de commande de l'installation. Cette synchronisation permet également une meilleure robustesse lors des variations du débit total de la mélangeuse.

Plus particulièrement, au cours de l'opération (2) de l'étape (ii), la matrice $\hat{B}$ est déterminée en utilisant l'équation suivante :

$$\frac{d\hat{B}_j^t}{dt} = -\beta_j HU(t)(y_j(t) - y_j^{mes}(t)), \quad (2)$$

avec $U(t) = (U_1(t),...U_n(t))^t$, à l'instant t, vecteur recette prenant en compte les volumes morts.

et $y(t) = \sum_{i=1}^{n} U_i(t)b_i$ , $b_i$ étant le vecteur des propriétés du constituant i.

Avantageusement, les grandeurs de commande et de sortie entrant dans cette équation sont synchronisées pour tenir compte du retard de pré-mélange et du retard de mesure.

Les zones de pré-mélange et les analyseurs induisent en effet des retards. Selon la propriété mesurée, les retards d'analyseurs peuvent être considérés comme constants ou variables en fonction de la valeur mesurée. Afin de compenser ces retards, le procédé selon l'invention utilise un dispositif de synchronisation qui prédit les valeurs futures des propriétés (à partir des caractéristiques des constituants et des derniers pourcentages calculés), sachant que la mesure correspondante qui sera fournie par l'analyseur ne sera pas encore disponible à ce moment là à cause du retard d'analyse (incluant le retard de la boucle d'échantillonnage et le retard d'analyseur).

Par exemple, dans le cas de retards de mesure variables, on utilise une table de correspondance permettant d'associer plusieurs valeurs de retards dans des intervalles de fonctionnement donnés : on obtient alors un profil de retard constant par morceaux, le niveau de retard variant automatiquement lorsque l'on change de plage de fonctionnement. Ce niveau de retard induit ensuite une nouvelle synchronisation des prédictions avec les mesures.

Avantageusement, dans le procédé de contrôle selon l'invention, la recette u déterminée au cours de l'opération (3) de l'étape (ii) est obtenue au moyen d'un procédé d'optimisation comprenant les étapes suivantes :

(a) - déterminer la solution d'un problème de régulation complet P0, cette solution consistant en une recette u optimisée prenant en compte des contraintes sur les proportions des constituants et des contraintes sur les propriétés du mélange,

- si le problème de régulation complet P0 est solvable, on applique la recette u, solution de P0,

(b) - si le problème de régulation complet P0 n'est pas solvable, déterminer une recette u pour laquelle un problème de régulation minimal P1 est résolu, qui ne prend en compte que des contraintes du problème P0 définies comme prioritaires, ce problème P1 met en oeuvre une succession de problèmes d'optimisation, normalement faisables, dont les critères consistent à pénaliser la violation desdites contraintes prioritaires, afin de définir de nouvelles valeurs atteignables pour ces contraintes prioritaires,

(c) - si le problème de régulation minimal P1 est solvable, déterminer une recette u pour laquelle un problème de régulation P2 est résolu, qui prend en compte lesdites nouvelles valeurs atteignables des contraintes prioritaires du problème P0 ainsi que des contraintes non prioritaires du problème P0, ce problème P2 met en oeuvre un problème d'optimisation dont les critères consistent à pénaliser la violation desdites contraintes non prioritaires, afin de définir de nouvelles valeurs atteignables pour ces contraintes non prioritaires,

- si le problème de régulation minimal P1 n'est pas solvable, on applique la recette u actuelle (c'est-à-dire la recette appliquée avant l'optimisation de l'étape (ii)),

(d) - si le problème de régulation P2 est solvable, déterminer une recette u pour laquelle un problème de régulation P3 est résolu, qui prend en compte lesdites nouvelles valeurs atteignables des contraintes prioritaires du problème P0 obtenues à l'étape (b), lesdites nouvelles valeurs atteignables des contraintes non prioritaires obtenues à l'étape (c), ainsi que toutes les autres contraintes non prioritaires du problème P0 et non traitées par les problèmes P1 et P2, ce problème P3 met en oeuvre une succession de problèmes d'optimisation, normalement faisables, dont les critères consistent à pénaliser la violation desdites autres contraintes non prioritaires, afin de définir de nouvelles valeurs atteignables pour ces autres contraintes non prioritaires,

- si le problème de régulation P2 n'est pas solvable, on applique la recette obtenue par le problème P1,

(e) si le problème de régulation P3 est solvable, la recette appliquée est la solution du problème P3, sinon, la recette est la solution du problème P2.

Les séquences d'optimisation (a) à (e) assurent une gestion optimale des priorités qui permet de traiter les problèmes infaisables en les dégradant jusqu'à obtenir un ensemble de contraintes faisables. Ces séquences d'optimisation présentent l'originalité de chercher la solution d'un problème minimal si le problème complet est infaisable, puis d'augmenter progressivement le nombre de contraintes, au lieu de diminuer progressivement le nombre de contraintes, comme dans les séquences d'optimisation classiques. De cette manière, il est possible d'obtenir une recette u qui respecte toujours au mieux les contraintes définies comme prioritaires.

Avantageusement, les contraintes non prioritaires traitées par le problème P2 concernent les références, et sont dites "de régulation" correspondant aux équations de régulation sur consigne fixe.

Avantageusement, les étapes (b) et (d) sont elles-mêmes des séquences d'optimisation qui peuvent être découpées en étapes, tel que décrit ci-après.

L'étape (b) est de préférence constituée des étapes ($b_i$) où l'on traite successivement les contraintes dures (prioritaires) de rang décroissant. Au cours de chaque étape (bi), on veut trouver une relaxation optimale fournissant la valeur de toutes les contraintes dures de même rang i, qui deviennent des contraintes atteignables, en prenant en compte les contraintes prioritaires sur les proportions des bases et les contraintes atteignables sur les propriétés du mélange de rang j>i, éventuellement relaxées aux étapes **bj** précédant l'étape courante **$b_i$**.

L'étape (d) est de préférence constituée des étapes ($d_i$) où l'on traite successivement les contraintes douces (non prioritaires) de rang décroissant. Au cours de chaque étape ($d_i$), on veut trouver une relaxation optimale fournissant la valeur de toutes les contraintes douces de même rang i, qui deviennent des contraintes atteignables, en prenant en compte les contraintes prioritaires sur les proportions des bases, les contraintes atteignables sur les propriétés du mélange de rang dur éventuellement relaxées aux étapes ($b_i$), les contraintes atteignables en terme de cible de régulation sur les propriétés régulées sur cible calculées à l'étape (c), et enfin, les contraintes douces atteignables sur les propriétés de rang j>i, éventuellement relaxées aux étapes $d_j$ précédent l'étape courante **$d_i$**.

Avantageusement, la séquence d'optimisation peut comprendre une étape supplémentaire au cours de laquelle, si le problème de régulation précédent P3 est solvable, on détermine une recette u pour laquelle le problème de régulation P0 est résolu en prenant en compte lesdites nouvelles valeurs atteignables déterminées lors des étapes (b), (c), (d).

Il est ainsi possible d'assurer une orientation optimisée de recette calculée, par exemple en maximisant ou minimisant certains constituants, de façon hiérarchisée, ou en minimisant l'écart entre la recette à calculer et la recette initiale de référence, dès que l'on dispose de suffisamment de degrés de liberté.

Cette étape supplémentaire permet, dans certains cas, d'obtenir quand même une orientation optimale de la recette sur la totalité des contraintes initiales partiellement dégradées alors que le problème complet initial était infaisable.

Avantageusement, les contraintes prioritaires prises en compte pour la résolution du problème P1 sont des contraintes sur les proportions des constituants et des contraintes sur les propriétés du mélange.

Les contraintes sur les proportions des constituants incluent notamment des bornes simples sur les proportions de constituants et une contrainte sur la somme des proportions des constituants. Les contraintes prioritaires sur les propriétés du mélange sont éventuellement relaxées lors des itérations précédentes de P1. La solution recherchée est une recette u permettant de prendre en compte les contraintes prioritaires éventuellement relaxées sur les propriétés de mélange.

Dans le cas où le procédé est destiné à une installation de préparation d'un mélange de n constituants et d'additifs, pour une propriété j du mélange sur laquelle influe l'additif, le modèle de commande prend en compte l'effet d de l'ajout d'additif au cours des opérations (2) et (3) de l'étape (ii) selon : $y_j = \hat{B}_j u + d$.

L'invention concerne également un dispositif d'élaboration et de contrôle d'un mélange de constituants, comprenant des voies de transport des constituants à mélanger vers une voie principale reliée à l'emplacement de réception du mélange, des moyens pour commander les débits des constituants sur chaque voie de transport, des moyens de mesure en continu sur la voie principale des paramètres représentatifs du mélange en cours d'élaboration, et des moyens de calcul des proportions des différents constituants entrant dans le mélange, caractérisé en ce qu'il comprend un estimateur relié aux moyens de calcul, l'estimateur comprenant des moyens programmés pour produire une estimation des propriétés des constituants en utilisant les mesures des propriétés du mélange mesurées par les moyens de mesure, les moyens de calcul comprenant des moyens programmés pour calculer au moyen de cette estimation les proportions des différents constituants entrant dans le mélange afin d'obtenir un mélange comportant des propriétés pré-déterminées.

Par moyens de mesure en continu, on entend des moyens aptes à mettre en oeuvre un processus continu de mesure, tel que défini plus haut.

De préférence, l'estimateur du dispositif comprend des moyens programmés pour mettre en oeuvre les opérations (1) et (2) des étapes (i) et (ii) du procédé selon l'invention.

Avantageusement, l'estimateur comprend des moyens de synchronisation programmés pour prendre en compte les retards dus aux volumes morts au niveau de zones de pré-mélange d'au moins deux constituants du mélange.

En variante, l'estimateur comprend des moyens de synchronisation programmés pour prendre en compte les retards dus aux volumes morts au niveau de plusieurs étages, au moins un étage étant constitué d'une ou plusieurs zones de pré-mélange d'au moins deux constituants du mélange.

Autrement dit, un étage est situé entre une arrivée de constituants, mélangés ou non, et une sortie de constituants, mélangés et non mélangés, et comprend au moins un pré-mélange d'au moins deux constituants (chacun de ces constituants pouvant être lui-même ' un mélange de constituants) arrivants fournissant un pré-mélange de ces constituants en sortie.

De préférence, ces moyens de synchronisation sont programmés pour mettre en oeuvre l'équation (2) de l'opération (2) de l'étape (ii) du procédé selon l'invention pour l'élaboration d'un mélange de constituants, dans lequel au moins un pré-mélange d'au moins deux des constituants est réalisé avant la préparation du mélange.

Avantageusement, le dispositif comprend un optimiseur relié aux moyens de calcul et à un moyen de stockage d'objectifs de mélange, l'optimiseur comprenant des moyens programmés pour optimiser la recette u des proportions des constituants déterminée par les moyens de calcul en fonction d'objectifs de mélange stockés dans ledit moyen de stockage.

De préférence, l'optimiseur comprend alors des moyens programmés pour mettre en oeuvre le procédé d'optimisation du procédé d'élaboration décrit plus haut.

Avantageusement, le dispositif comprend au moins un bac d'additif relié par une voie de transport à la voie principale, en aval de la zone de mélange des constituants, un moyen de commande du débit d'additif associé au bac prévu sur la voie de transport, et un contrôleur d'injection d'additif relié audit moyen de commande, à l'optimiseur et au moyen de stockage d'objectifs de mélange, le contrôleur d'injection d'additif étant apte, pour une propriété j du mélange sur lequel influe un additif, à optimiser la proportion de l'additif afin de réguler ladite propriété j correspondante du mélange en tenant compte d'une cible fournie par le moyen de stockage d'objectifs de mélange.

L'invention est maintenant décrite au moyen d'exemples et en référence aux dessins annexés, non limitatifs, dans lesquels :

- la figure 1 est une représentation schématique d'un dispositif d'élaboration d'un mélange de produits conforme à l'invention ;
- la figure 2 est un exemple de topographie d'un mélange de 6 bases comportant trois pré-mélanges ;
- la figure 3 représente un exemple de séquencement des problèmes d'optimisation ;
- la figure 4 représente l'évolution en fonction du temps de la teneur en soufre du mélange de l'exemple 7 ;
- la figure 5 représente l'évolution en fonction du temps des proportions des bases du mélange de l'exemple 7 ;
- les figures 6a-6e représentent l'évolution en fonction du temps des proportions des bases (figure 6a), et des qualités du mélange essence de l'exemple 8, à savoir, régulations RON (figure 6b) et RVPD (figure 6c) et surveillance de zone pour le pourcent de distillé (figure 6d) et pour la teneur en benzène (figure 6e) ;
- les figures 7a-7e représentent l'évolution en fonction du temps des paramètres suivants du mélange gazole avec régulation par injection d'additifs de l'exemple 9 :

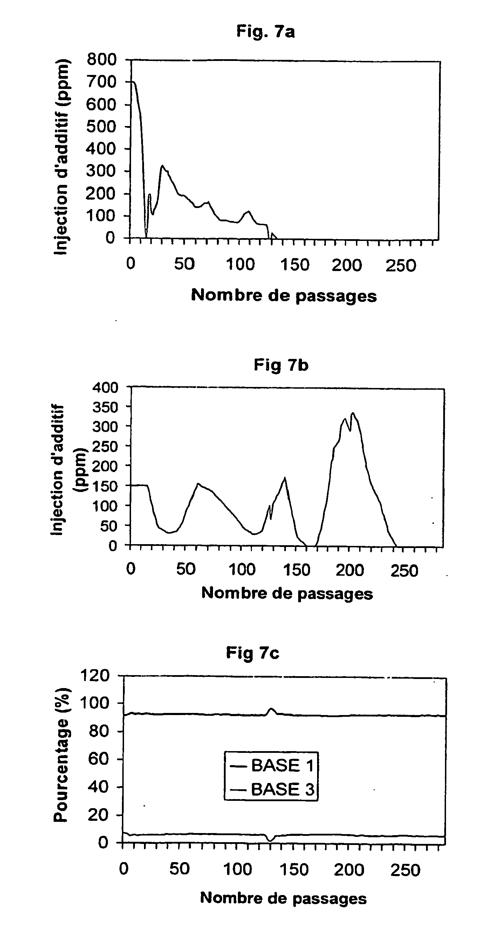

figure 7a : profil d'injection de dope influant sur l'indice de cétane

figure 7b : profil d'injection de dope influant sur la filtrabilité

figure 7c : ratio des bases 1 et 3 utilisées dans l'élaboration du mélange,

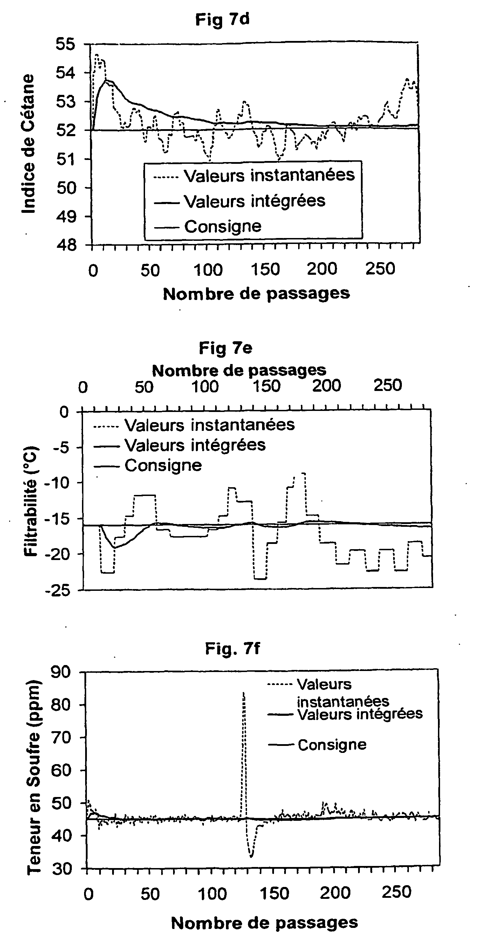

figure 7d : indice de cétane du mélange,

figure 7e : filtrabilité du mélange,

figure 7f : teneur en soufre du mélange.

L'invention est décrite ci-après pour des installations pétrolières permettant d'élaborer des mélanges contenant des proportions déterminées de plusieurs constituants ou bases disponibles, afin que la combinaison des propriétés de ces bases confère au mélange les propriétés désirées respectant des extrema ou une valeur de consigne.

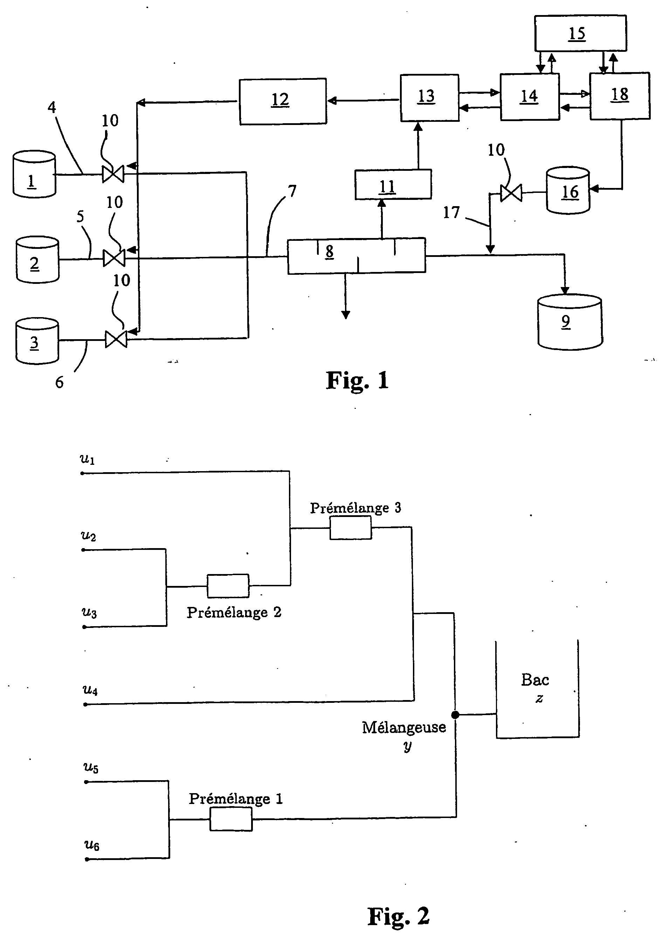

La figure 1 représente un schéma d'un dispositif de contrôle de l'élaboration d'un mélange de produits selon l'invention.

Les constituants ou bases, du mélange sont contenus dans des bacs 1, 2, 3, dont le nombre a été limité à trois pour des commodités de représentation. Les constituants à mélanger parcourent des voies de transport 4, 5, 6 vers une voie principale 7 pourvue d'une mélangeuse 8, la voie principale conduisant le mélange à un bac de destination 9. Des moyens désignés par la référence 10 sur la figure 1 permettent de commander les débits des bases sur chaque voie de transport. Il s'agit par exemple de régulateurs de débit commandant une vanne.

Des moyens d'analyse 11, ou moyens de mesure en continu, permettent de mesurer de manière répétitive les paramètres représentatifs du mélange au cours de son élaboration. Ces moyens 11 sont par exemple constitués par des analyseurs en ligne connectés à la mélangeuse 8 située sur la voie principale 7.

Dans le cas d'un mélange de produits pétroliers, ces analyseurs mesurent par exemple la teneur en soufre du mélange (sulfurimètre), l'indice d'octane (moteur octane), l'indice de cétane (moteur cétane)....

L'installation comprend également des moyens de calcul 12 des proportions (recette u) des bases entrant dans le mélange, un estimateur 13 et un optimiseur 14 permettant de déterminer une recette u des proportions des bases qui sera transmise aux moyens de commande 10.

Le rôle de l'estimateur 13 est d'estimer les propriétés des bases à partir des analyses des propriétés du mélange effectuées par les moyens d'analyse 11, les moyens de calcul 12 comprenant des moyens programmés pour calculer, au moyen de cette estimation et de valeurs de consigne de ces propriétés ou de valeurs de contraintes associées à ces propriétés, les proportions des différentes bases entrant dans le mélange afin d'obtenir un mélange comportant des propriétés pré-déterminées. Les proportions des bases à appliquer sont calculées de manière répétitive, à des intervalles de temps prédéterminés, pas forcément égaux (par exemple de l'ordre de 5 minutes), permettant ainsi un contrôle précis des propriétés du mélange.

L'estimateur 13 comprend des moyens programmés pour mettre en oeuvre les opérations de détermination des propriétés des constituants faisant partie du procédé d'élaboration du mélange selon l'invention décrit plus haut.

Le rôle de l'optimiseur 14 est d'optimiser une recette u des proportions des bases à partir des propriétés estimées des bases, de contraintes sur la recette u et de contraintes sur les propriétés du mélange. La recette u ainsi optimisée sert à commander les moyens de commande 10.

L'optimiseur 14 comprend des moyens programmés pour mettre en oeuvre le procédé d'optimisation de la recette calculée pour la mise en oeuvre par l'estimateur du procédé de contrôle selon l'invention.

Le dispositif comprend en outre un moyen de stockage 15 d'objectifs de mélange. Ce moyen de stockage d'objectifs de mélange contient les différents objectifs fixés par l'utilisateur pour obtenir le mélange désiré. Il est relié à l'optimiseur 14 afin de transmettre les cibles souhaitées pour chaque mélange.

Dans l'exemple, il s'agit de la recette initiale de référence, des cibles de type consigne ou limites hautes et basses sur les propriétés, des contraintes mini/maxi sur les proportions de constituants, des orientations souhaitées mini/maxi sur les constituants, du volume à fabriquer et du mode de régulation choisi (instantané, intégré, intégré sur bac, tels que définis plus loin).

Le dispositif selon l'invention peut également comprendre un bac 16 d'additif relié, par une voie de transport 17 à la voie principale 7, en aval de la mélangeuse 8. Un moyen de commande 10 du débit d'additif est également prévu sur la voie de transport 17. Ce moyen 10 est commandé par un contrôleur d'injection d'additif 18, reliée à l'optimiseur 14 et au moyen de stockage 15 d'objectifs de mélange.

Le rôle du contrôleur d'injection d'additif 18 est d'optimiser une recette d'injection de dopes du bac 16, afin de réguler une propriété donnée, parallèlement à l'optimisation de recette des constituants 1 à 3 opérée par l'optimiseur 14, sachant qu'en cas de saturation d'injection de dope (par exemple quand une limite de consommation pré-définie par les utilisateurs a été atteinte), une bascule automatique de la propriété régulée par dope s'opère sur la régulation multivariable par action sur les proportions de constituants, pilotée par l'optimiseur 14.

Bien entendu, plusieurs bacs 16 d'additifs peuvent être envisagés.

Le dispositif selon l'invention peut fonctionner suivant deux modes :

*- Contrôle en analyses intégrées (mode intégré).*

Ce contrôle est bien adapté au cas où le mélange coule dans un bac de produit fini (bac de destination) isolé. Dans ce cas, c'est la qualité moyenne intégrée sur l'ensemble du bac qui est contrôlée.

Les proportions des bases sont alors commandées de manière à modifier les propriétés instantanées du mélange afin de compenser les écarts de qualité constatés dans le passé du mélange, de manière à amener les propriétés de l'ensemble du mélange contenu dans le bac de destination aux valeurs de consigne, ou à l'intérieur des contraintes.

Les actions de commande des proportions des bases augmentent alors en même temps que le volume du mélange dans le bac de destination.

On distingue ici un mode "intégré mélange" et un mode "intégré bac". Ce dernier prend en compte le volume et la qualité du fond de bac initial avant mélange, alors que le mode "intégré mélange" opère sur le produit fabriqué, qui coule de la mélangeuse, les qualités de ce produit de mélange à contrôler étant intégrées, c'est-à-dire cumulées, moyennées depuis le début du mélange.

*- Contrôle en analyses instantanées (mode instantané)*

Ce contrôle est bien adapté dans le cas où le mélange coule directement dans un oléoduc, un bateau, un train ou un camion. Il est alors important de maintenir en permanence les valeurs instantanées des analyses proches des consignes ou à l'intérieur des contraintes. Dans ce cas, les actions de commande des proportions des bases sont indépendantes du volume de mélange écoulé.

Le fonctionnement de l'estimateur 13 de propriétés est indifférent du mode de régulation choisi, instantané ou intégré. Dans les deux modes, il assure de façon instantanée et synchrone le calcul d'une prédiction de propriétés qui peut ensuite être utilisée par l'optimiseur 14. Le procédé d'optimisation mis en oeuvre par l'optimiseur utilise des équations de régulation, détaillées plus loin, qui font intervenir soit une consigne correspondant directement à la cible recherchée en mode instantané, soit une référence calculée sur une trajectoire modulée par un horizon réglable en mode intégré.

Les exemples 1 à 5 décrivent des formules qui peuvent être utilisées pour mettre en oeuvre l'invention.

Ces exemples concernent respectivement : une rétro-action sans prémélange, une rétro-action avec pré-mélange, des séquences d'optimisation, une gestion en mode intégré, et une régulation par additifs.

La rétro-action décrite dans l'exemple 1 permet la prise en compte des analyseurs en ligne, qui est à la base du principe de régulation. Elle permet notamment une estimation en temps réel des propriétés des constituants, selon un mécanisme de correction des propriétés des constituants suivant une orientation privilégiée (nouvelle analyse de laboratoire des propriétés des constituants) ou non.

Cette rétro-action est complétée dans l'exemple 2 des manière à permettre une synchronisation de la commande, dans le cas de multiples pré-mélanges, en parallèle (sur un même étage) ou en série (selon plusieurs étages successifs de pré-mélange). Ceci permet d'obtenir une commande plus robuste en pratique, car moins sujette aux oscillations consécutives à d'éventuels défauts de synchronisation entre mesure et prédiction, et d'en élargir l'utilisation pour les cas de pré-mélanges de constituants.

Les rétro-actions présentées dans les exemples 1 ou 2 sont utilisées pour le calcul des prédictions des propriétés du mélange. Ces prédictions sont utilisées comme équations de contraintes dans des séquences d'optimisation, telles que celles présentées dans l'exemple 3, et permettent le calcul de la commande appropriée pour atteindre les objectifs fixés de mélange.

Les exemples 1 ou 2, et 3 décrivent donc un exemple de chaîne de traitement requise en mode instantané.

L'exemple 4 permet d'apporter un complément spécifique du traitement en mode intégré, qui utilise le schéma de fonctionnement du mode instantané présenté en référence aux exemples 1 à 3, moyennant des modifications sur les seuils (relaxations des valeurs des contraintes instantanées) et sur les références (consignes modifiées via trajectoires de références)..

L'exemple 5 décrit une régulation par injection d'additif, qui vient s'ajouter aux mécanismes des exemples 1 ou 2, et 3, et qui peut utiliser des mécanismes similaires à ceux du mode d'intégration décrit dans l'exemple 4. Un principe de bascule de régulation vers les bases y est mentionné, ce qui correspond à une passerelle du mécanisme décrit dans l'exemple 5 vers celui décrit dans les exemples 1 à 3.

L'exemple 6 décrit quant à lui différentes options d'optimisation de la recette.

Dans le cas d'un mélange de n bases (ou constituants), on utilise les notations suivantes :

● u, vecteur de dimension n, est la recette à calculer et $\overline{u}$ est la recette de référence. La recette représente les proportions des différentes bases entrant dans le mélange : $u \in [0,1]^n$ et $\sum_{i=1}^{n} u_i = 1.$

● y, vecteur de dimension m, représente les m propriétés estimées du mélange pour la recette u.

● $y_j^{mes}$ représente la mesure de la propriété j, avec $y_j^{mes} = B_j u$, en supposant les lois de mélange linéaires. On pourra noter ici que l'égalité y = Bu ne s'applique que dans le cas sans pré-mélange (dynamique ou stationnaire, c'est-à-dire en régime transitoire ou en régime établi) et dans le cas stationnaire s'il y a des pré-mélanges.

● B est la matrice m x n des propriétés des constituants du mélange,

● $\hat{B}$ est l'estimée de B utilisée dans les calculs, de telle sorte que y = $\hat{B}$u.

Les propriétés courantes y du mélange en sortie de mélangeuse sont dites des propriétés instantanées. Elles sont mesurées par les analyseurs en ligne.

Les propriétés courantes du produit coulé, notées z, sont dites propriétés intégrées.

Les propriétés courantes d'un bac de destination du mélange, notées zfb, sont dites propriétés intégrées fond de bac.

**Exemple 1 : Rétroaction sans pré-mélange, commande en mode instantané.**

Cet exemple vise à montrer comment l'équation (1), utilisée pour la mise en oeuvre de l'opération (2) de l'étape (ii) du procédé d'élaboration et de contrôle d'un mélange selon l'invention, permet de calculer une matrice d'estimation des propriétés des bases. Cet exemple correspond au cas dans lequel les bases sont mélangées directement pour élaborer le mélange, sans pré-mélange.

En définissant le système dynamique suivant pour la mise à jour de $\hat{B}_j$ à partir de u et de la mesure $\dot{y}_j^{mes}$ :

$$\frac{d\hat{B}_j^t}{dt} = -\beta_j H u (y_j - y_j^{mes}), \quad (1)$$

Où

● la matrice H est une matrice symétrique définie positive et vaut dans cet exemple :

$$\frac{1}{\|\bar{u}\|} \begin{pmatrix} \frac{1}{\bar{u}_1} & & \\ & \ddots & \\ & & \frac{1}{\bar{u}_n} \end{pmatrix}.$$

● $B_j^t$ est la transposée de $B_j$,

● $\beta_j$ est un réel strictement positif.

Il est possible de montrer que la fonction $\psi(\hat{B}_j) = \frac{1}{2}(\hat{B}_j - B_j)H^{-1}(\hat{B}_j - B_j)^t$ est une fonction de Lyapunov pour le système dynamique (1). En effet, elle est positive et sa dérivée en fonction du temps est négative :

$$\frac{d\psi}{dt} = -\beta_j (\bar{y}_j - \bar{y}_j^{mes})^2$$

Donc $\hat{B}_j^t$ tend vers le plus grand invariant par le système dynamique (1), inclus dans { $\hat{B}_j^t$ tel que dψ/dt = 0}. Ainsi, $\hat{B}_j^t$ tend vers une valeur telle que $y_j = y_j^{mes}$, ce qui équivaut par définition à $\hat{B}_j$u = $B_j$u.. Pour autant,

comme les valeurs de u sont liées par la n contrainte $\sum_{i=1}^{n} u_i = 1$, , il n'est pas possible de conclure à l'égalité de $\hat{B}_j$ de $B_j$.

Toutefois, quand un problème d'optimisation comprend une contrainte $\hat{B}_j u = \overline{y_j^{réf}}$ et lorsqu'une solution existe, alors asymptotiquement, $y_j^{mes} = y_j^{réf} \cdot$ . De manière analogue, les contraintes inégalités posées sur l'estimée $y_i$ sont respectées par la mesure $y_j^{mes} \cdot$ .

L'utilisation du système dynamique (1) pour la mise à jour des propriétés du mélange constitue ainsi un système de rétroaction qui permet d'éviter, pour les sorties, les décalages entre estimations et mesures.

Une variante dans l'utilisation du système dynamique (1) serait d'utiliser un terme d'écart e à la recette initiale de référence et non un terme de recette u dans l'équation différentielle d'estimation.

Lorsque la mesure est retardée, et que le retard est connu, il suffit de synchroniser les grandeurs u, $y_j$ et $y_j^{mes}$ pour que les propriétés de convergence restent valides.

Outre les retards de mesure analyseurs, la synchronisation pourra prendre en compte le(s) retard(s) de constituants en amont de mélangeuse.

Un tel retard est par exemple observé en cas de pré mélange de constituants, tel que décrit ci-après.

**Exemple 2 : Rétroaction avec pré-mélanges, commande en mode instantané.**

Cet exemple est similaire à l'exemple 1, mais correspond au cas où certaines bases sont pré-mélangées avant leur mélange à d'autres bases pour former le mélange désiré.

La figure 2 représente un exemple de topographie avec un mélange de 6 bases.

Considérons une installation comportant p pré-mélanges numérotés de 1 à p. Notons :

- $Q_i(t)$ le débit volumique de la base i au temps t, avec $i \in \{1,...n\}$;
- $Q_{n+i}(t)$ le débit volumique total traversant le volume mort associé au prémélange i au temps t, avec $i \in \{1,...p\}$ (le débit entrant est toujours égal au débit sortant) ;

- $Q(t)$ le débit volumique total de la mélangeuse au temps t, n $Q(t) = \sum_{i=1}^{n} Q_i(t)$, ,

- $V_i$, le volume mort associé au pré-mélange i,

- $b_i$, le vecteur des propriétés de la base i, $b_j^E(t)$ (respectivement $b_j^S(t)$ ) le vecteur des propriétés à l'entrée (respectivement la sortie) du pré-mélange j au temps t. Par convention, pour une base $b_i$ : $\overline{b_j^E(t)} = b_j^S(t) \overline{}$ . .

A toute base i, associons un chemin $\Pi_i$, défini par la suite des $p_i$ volumes morts traversés à partir de cette base pour atteindre la mélangeuse. Ce chemin est une suite de $p_i$ entiers différents qui se rapportent aux indices de numérotation des pré-mélanges, $\overline{\Pi_i} = \left\{ \pi_i^1, \pi_i^2, ..., \pi_i^{p_i} \right\}$, , avec $\pi_i^j \in \left\{ 1, ..., p \right\}$ pour tout $j \in \{1,...,p_i\}$. $\Pi_i = \varnothing$, $p_i = 0$, signifie que la base i est directement injectée dans la mélangeuse.

Dans le cas de la figure 2, nous avons :

$$\Pi_1 = \{3\}, p_1 = 1,$$

$$\Pi_2 = \{2,3\}, p_2 = 2 \cdot$$

$$\Pi_3 = \{2;3\}, p_3 = 2$$

$$\Pi_4 = \varnothing, p_4 = 0$$

$$\Pi_5 = \{1\}, p_5 = 1$$

$$\Pi_6 = \{1\}, p_6 = 1$$

Pour tout pré-mélange i, définissons l'ensemble $\Gamma_i$ de ses $q_i$ débits entrants. C'est un ensemble de $q_i$ entiers différents qui se rapportent aux indices de numérotation des débits volumiques, $\Gamma_i = \left\{\gamma_i^1, \gamma_i^2, ..., \gamma_i^{q_i}\right\}$, , avec $\gamma_i^j \in \{1, ..., n+p\}$, , pour tout $j \in \{1, ..., q_i\}$.

Dans le cas de la figure 2, nous avons :

$$\Gamma_1 = \{5,6\}, q_1 = 2$$

$$\Gamma_2 = \{2,3\}, q_2 = 2$$

$$\Gamma_3 = \{1, 6+3\} = \{1,9\}, q_3 = 2.$$

Pour $\Pi_i = \varnothing$, les propriétés $b_i$ interviennent sous la forme pondérée $Q_1(t)/Q(t)b_i$ dans l'expression des propriétés du mélange sous forme de combinaison linéaire des propriétés des bases.

Intéressons nous maintenant au cas $\Pi_i \neq \varnothing$.

Pour le pré-mélange $\pi_i^j$, , le débit total est $Q_{\pi_i^j}(t) = \sum_{k \in \Gamma_{\pi_i^j}} Q_k(t)$. . La propriété en entrée $b_{\pi_i^j}^E(t)$ s'écrit :

$$b_{\pi_i^1}^E(t) = \frac{\sum_{j \in \Gamma_{\pi_i^1}} b_j^E Q_j(t)}{\sum_{j \in \Gamma_{\pi_i^1}} Q_j(t)}$$

Dans cette entrée, le terme en $b_i$ intervient sous la forme :

$$\frac{Q_i(t)}{\sum_{j \in \Gamma_{\pi_i^1}} Q_j(t)} b_i = \frac{Q_i(t)}{Q_{\pi_i^1}(t)} b_i$$

En sortie, nous avons $b_{\pi_i^j}^S(t) = b_{\pi_i^j}^E(t - \delta_{\pi_i^j}(t))$, , le retard pur $\delta_{\pi_i^j}(t)$ étant défini par :

$$V_{\pi_i^1} = \int_{t-\delta_{\pi_i^1}(t)}^{t} Q_{\pi_i^1}(\tau) d\tau. \qquad (3)$$

Le terme en $b_i$ intervient donc dans $b_{\pi_i^j}^S(t)$ sous la forme

$$\frac{Q_i(t - \delta_{\pi_i^1}(t))}{Q_{\pi_i^1}(t - \delta_{\pi_i^1}(t))} b_i.$$

De manière similaire, nous avons pour le pré-mélange $\pi_i^2$ : :

$$b_{\pi_i^2}^E(t) = \frac{\sum_{j \in \Gamma_{\pi_i^2}} b_j^E Q_j(t)}{\sum_{j \in \Gamma_{\pi_i^2}} Q_j(t)},$$

Soit, pour le terme en $b_i$ dans $b_{\pi_i^2}^S(t)$

$$\frac{Q_{\pi_i^1}(t)}{Q_{\pi_i^2}(t)} \frac{Q_i(t - \delta_{\pi_i^1}(t))}{Q_{\pi_i^1}(t - \delta_{\pi_i^1}(t))} b_i.$$

Pour $b_{\pi_i^2}^S(t) = b_{\pi_i^2}^E(t - \delta_{\pi_i^2}(t))$ le terme en $b_i$ intervient sous la forme :

$$\frac{Q_{\pi_i^1}(t - \delta_{\pi_i^2}(t))}{Q_{\pi_i^2}(t - \delta_{\pi_i^2}(t))} \frac{Q_i(t - \delta_{\pi_i^2}(t) - \delta_{\pi_i^1}(t - \delta_{\pi_i^2}(t)))}{Q_{\pi_i^1}(t - \delta_{\pi_i^2}(t) - \delta_{\pi_i^1}(t - \delta_{\pi_i^2}(t)))} b_i.$$

Nous voyons apparaître des compositions de retards sur les chemins $\Pi_i$. Définissons les fonctions :

$$\Delta_i^j(t) : t \mapsto t - \delta_{\pi_i^j}(t), ,$$ pour tout $\pi_i^j$ dans $\Pi_i$. La composition de ces fonctions à $j$ fixé est définie par :

$$\Delta_i^{k,j}(t) \triangleq \Delta_i^k(\Delta_i^j(t)) : t \mapsto t - \delta_{\pi_i^j}(t) - \delta_{\pi_i^k}(t - \delta_{\pi_i^j}(t))$$

et

$$\Delta_i^{l,k,j}(t) \triangleq \Delta_i^l(\Delta_i^{k,j}(t)).$$

Avec ces définitions, la formule pour le terme $b_i$ dans $b_{\pi_i^2}^S(t)$ s'écrit

$$\frac{Q_{\pi_i^1}(\Delta_i^2(t))}{Q_{\pi_i^2}(\Delta_i^2(t))} \frac{Q_i(\Delta_i^{1,2}(t))}{Q_{\pi_i^1}(\Delta_i^{1,2}(t))} b_i.$$

A la sortie du dernier prémélange $\pi_i^{p_i}$, , nous avons pour $b_{\pi_i^{p_i}}^S(t)$ en $b_i$

$$\frac{Q_{\pi_i^{p_i}-1}(\Delta_i^{p_i}(t))}{Q_{\pi_i^{p_i}}(\Delta_i^{p_i}(t))} \frac{Q_{\pi_i^{p_i}-2}(\Delta_i^{p_i-1,p_i}(t))}{Q_{\pi_i^{p_i}-1}(\Delta_i^{p_i-1,p_i}(t))} \cdots \frac{Q_{\pi_i^1}(\Delta_i^{2,\dots,p_i}(t))}{Q_{\pi_i^2}(\Delta_i^{2,\dots,p_i}(t))} \frac{Q_i(\Delta_i^{1,2,\dots,p_i}(t))}{Q_{\pi_i^1}(\Delta_i^{1,2,\dots,p_i}(t))} .$$

et enfin dans le mélange, en notant $U_i(t)$ le terme en facteur de $b_i$

$$U_i(t) = \frac{Q_{\pi_i^{p_i}}(t)}{Q(t)} \frac{Q_{\pi_i^{p_i}-1}(\Delta_i^{p_i}(t))}{Q_{\pi_i^{p_i}}(\Delta_i^{p_i}(t))} \frac{Q_{\pi_i^{p_i}-2}(\Delta_i^{p_i-1,p_i}(t))}{Q_{\pi_i^{p_i}-1}(\Delta_i^{p_i-1,p_i}(t))} \cdots \frac{Q_{\pi_i^1}(\Delta_i^{2,\dots,p_i}(t))}{Q_{\pi_i^2}(\Delta_i^{2,\dots,p_i}(t))} \frac{Q_i(\Delta_i^{1,2,\dots,p_i}(t))}{Q_{\pi_i^1}(\Delta_i^{1,2,\dots,p_i}(t))} . \quad (4)$$

Alors $U_i(t) = u_i(t) = Q_i(t)/Q(t)$ pour $\Pi, \neq \varnothing$, et la sortie s'écrit :

$$y(t) = \sum_{i=1}^{n} U_i(t) b_i \quad (5)$$

Ainsi, pour les cas pré-mélangés, l'équation (1) du système dynamique devient :

$$\frac{d\hat{B}_j^t}{dt} = -\beta_j H U(t)(y_j(t) - y_j^{mes}(t)), \quad (2)$$

Avec $U(t) = (U_1(t),...,U_n(t))'$ , les $U_i(t)$ étant définis par l'équation (4) et $y(t) = (y_i(t),..., y_m(t))'$ par l'équation (5).
La fonction utilisée dans le cas sans pré-mélange reste une fonction de Lyapunov pour cette nouvelle dynamique et permet de montrer la convergence de $\hat{B}U$ vers BU.

**Exemple 3 : séquences d'optimisation**

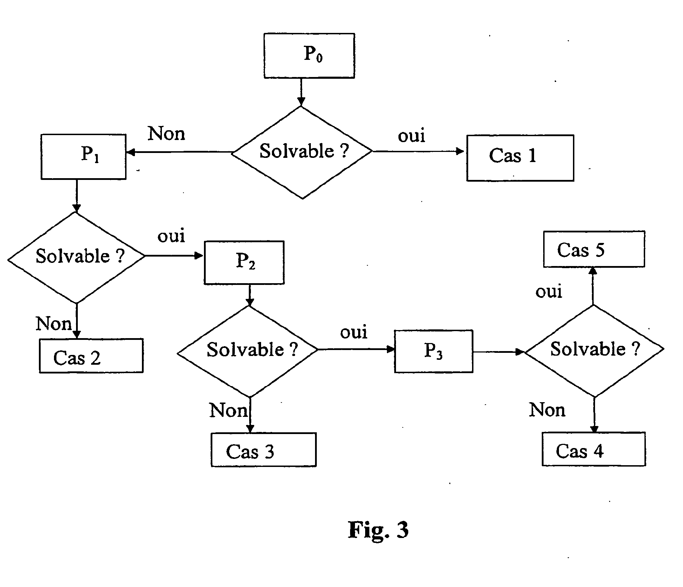

Le procédé de contrôle selon l'invention utilise un procédé d'optimisation pour déterminer la recette u lors de la sous étape (3) de l'étape (ii). Ce procédé d'optimisation comprend les étapes (a) à (d) énoncées plus haut. Le procédé d'optimisation est mis en oeuvre par l'optimiseur 14 et fournit une recette u optimisée à l'estimateur 13 pour la détermination de la recette à appliquer aux moyens de commande 10 du dispositif.
Un exemple de fonctionnement du procédé d'optimisation utilisé pour optimiser la recette u est décrit ci-après, en référence à la figure 3.

Notations :

On considère les sous-ensembles suivants de $M=\{1,2,...,m\}$, ensemble des indices attribués aux sorties:

- R, le sous-ensemble des indices de sortie pour lesquelles sont spécifiées des références calculées en mode intégré ou des consignes en mode instantané,
- $H_m$, le sous-ensemble des indices de sortie pour lesquelles sont spécifiées des bornes minimales dites "dures", c'est-à-dire qui doivent être respectées en priorité,
- $H_M$, le sous-ensemble des indices de sortie pour lesquelles sont spécifiées des bornes maximales dures,
- $S_m$, le sous-ensemble des indices de sortie pour lesquelles sont spécifiées des bornes minimales dites "douces", c'est-à-dire non prioritaires,
- $S_M$, le sous-ensemble des indices de sortie pour lesquelles sont spécifiées des bornes maximales douces.

A chaque sortie, sont supposées pouvoir être associées au plus une référence (ou consigne), une borne minimale (dure ou douce) et une borne maximale (dure ou douce). Implicitement donc, $H_m \cap S_m = \varnothing$ et $H_M \cap S_M = \varnothing$.
Par ailleurs, les effets estimés des additifs sont supposés pris en compte dans la valeur des références et des contraintes.

Les égalités devant être prises en compte pour les références $y_i^{réf}$ sont :

$$y = y_i^{réf}, \forall i \in R.$$

Soit $\hat{B}_R$ la matrice extraite de $\hat{B}$ en ne conservant que les lignes qui correspondent aux indices appartenant à R. En introduisant les vecteurs $y_R$ et $y_R^{réf}$, , cet ensemble d'inégalités se réécrit $y_R = \hat{B}_R u = y_R^{réf}$. C'est une contrainte sur l'inconnue u.

L'ensemble des contraintes sur les sorties s'écrit :

$$\begin{cases} y_i & \geq & y_i^{\min} & \forall i \in H_m \\ y_i & \leq & y_i^{\max} & \forall i \in H_M \\ y_i & \geq & y_i^{\min} & \forall i \in S_m \\ y_i & \leq & y_i^{\max} & \forall i \in S_M \end{cases}$$

Soit $\hat{B}_{H_m}$ la matrice extraite de $\hat{B}$ en ne conservant que les lignes relatives aux indices appartenant à $H_m$. En introduisant les vecteurs $y_{H_m}$ et $y_{H_m}^{\min}$, , le premier ensemble d'inégalités se réécrit $y_{H_m} = \hat{B}_{H_m} u \geq y_{H_m}^{\min}$. C'est une contrainte sur l'inconnue u. Via des notations similaires,

$$\begin{cases} \hat{B}_{H_m} u & \geq & y_{H_m}^{\min} \\ \hat{B}_{H_M} u & \leq & y_{H_M}^{\max} \\ \hat{B}_{S_m} u & \geq & y_{S_m}^{\min} \\ \hat{B}_{S_M} u & \leq & y_{S_M}^{\max} \end{cases}$$

Cet ensemble d'inégalités est bien entendu équivalent à

$$\begin{cases} -\hat{B}_{H_m} u & \leq & -y_{H_m}^{\min} \\ \hat{B}_{H_M} u & \leq & y_{H_M}^{\max} \\ -\hat{B}_{S_m} u & \leq & -y_{S_m}^{\min} \\ \hat{B}_{S_M} u & \leq & y_{S_M}^{\max} \end{cases}$$

Notons :

$$B_H = \begin{pmatrix} -B_{H_m} \\ B_{H_M} \end{pmatrix} \quad B_S = \begin{pmatrix} -B_{S_m} \\ B_{S_M} \end{pmatrix} \quad y_H^{\max} = \begin{pmatrix} -y_{H_m}^{\min} \\ y_{H_M}^{\max} \end{pmatrix} \quad y_S^{\max} = \begin{pmatrix} -y_{S_m}^{\min} \\ y_{S_M}^{\max} \end{pmatrix}$$

L'ensemble d'inégalités s'écrit finalement :

$$\begin{cases} \hat{B}_H u & \leq & y_H^{\max} \\ \hat{B}_S u & \leq & y_S^{\max} \end{cases}$$

Par la suite, conformément aux notations énoncées plus haut, sont utilisées, pour un ensemble quelconque P d'indices associés à ces sorties, les notations $y_p = \hat{B}_p u \le y_P^{Max}$ .. Pour une unique sortie d'indice j, la notation est simplement $y_j = \hat{B}_j u.$

Le problème d'optimisation initial P0 (problème complet), consiste à trouver la recette u la plus proche d'une recette de référence $\bar{u}$ , tout en respectant l'ensemble des contraintes sur u. Ce problème n'a pas forcément de solution. S'il n'en n'a pas, il faut quand même produire une nouvelle recette, qui est obtenue selon l'invention en résolvant séquentiellement plusieurs problèmes d'optimisation successifs:

- dans un premier temps, (problème P1), on cherche les valeurs admissibles pour les contraintes dures sur les sorties, en procédant de manière itérative des contraintes dures les plus prioritaires vers les contraintes dures les moins prioritaires;
- dans un second temps (problème P2), on cherche les valeurs admissibles pour les références;
- enfin, (problème P3), on cherche les valeurs admissibles pour les contraintes douces sur les sorties, en procédant de manière itérative des contraintes douces les plus prioritaires vers les contraintes douces les moins prioritaires.

Le tableau 1 décrit un exemple des séquences d'optimisation.

### Tableau 1 : séquences d'optimisation P0 à P3

| | | P0 | P1 | P2 | P3 |
|---|---|---|---|---|---|
| Optimisation de la recette | | critère | | | |
| Min/ Max analyseur | Doux | contrainte | | | critère |
| | Dur | contrainte | Critère | contrainte atteignable | contrainte atteignable |
| Consignes analyseurs | | contrainte | | Critère | référence atteignable |
| Vitesse / Min / Max Bases | | contrainte | contrainte | contrainte | contrainte |
| Somme voies = 100% | | contrainte | contrainte | contrainte | contrainte |

Les minima/maxima des bases utilisées comme contraintes prioritaires permanentes sont ramenées à des valeurs en proportions, sachant que les minima/maxima hydrauliques sont exprimés en $m^3/h$, en utilisant le débit total de la mélangeuse.

Les vitesses d'évolution (ROC) sont de l'ordre typiquement de 25%.

Pour la réalisation d'un mélange de type essence, les minima durs sont typiquement la densité, l'indice d'octane, les pourcents distillés, tandis que les maxima durs sont typiquement la teneur en soufre, la densité, la tension de vapeur, la volatilité, la teneur en benzène, la teneur en oléfines et la teneur en aromatiques. Et inversement pour les minima et maxima doux, sauf pour la densité qui voit son seuil minimum et maximum comme des seuils durs.

Pour la réalisation d'un mélange de type gazole, les minima doux sont typiquement la teneur en soufre, la densité, la filtrabilité et le point de trouble, et les maxima doux sont typiquement le point d'éclair, l'indice de cétane et le pourcent distillé. Et inversement pour les minima et maxima durs.

Pour la réalisation d'un mélange de type fioul, les minima durs sont typiquement la viscosité, et les maxima durs sont typiquement, la viscosité, la teneur en soufre, et la densité.

Les différents problèmes successifs détaillés ci-après peuvent être utilisés.

**Problème initial P0**

Le problème initial P0 est utilisé dans la mise en oeuvre de l'étape (a) du procédé d'optimisation décrit précédemment. La solution de ce problème de régulation complet P0, consiste en une recette u optimisée prenant en compte des contraintes sur les proportions des constituants et des contraintes sur les propriétés du mélange.

Ce problème consiste à respecter l'ensemble des contraintes sur la recette et sur les sorties, ainsi que les références sur les sorties, tout en s'éloignant le moins possible de la recette de référence, au sens des moindres carrés.

Le problème à résoudre est ainsi :

$$\min_{u} \| u - \overline{u} \|^2$$

$$\begin{cases} u^{min} \leq u \leq u^{max} \\ \sum_{i=1}^{n} u_i = 1 \\ \hat{B}_R u = y_R^{ref} \\ \hat{B}_H u \leq y_H^{max} \\ \hat{B}_S u \leq y_S^{max} \end{cases}$$

Le problème d'optimisation formulé ici fait apparaître comme variable d'optimisation un vecteur u de recette que l'on souhaite calculer.

Une alternative consiste à poser un problème d'optimisation similaire, avec comme variable d'optimisation un vecteur d'écart e entre la recette initiale de référence et la recette u des proportions des constituants.

Lorsque ce problème possède une solution u*, elle est appliquée. Dans le cas contraire, les trois problèmes P1 à P3 décrits ci-après sont résolus successivement.

Pour ce problème P0, les contraintes à respecter sont :

(1) des contraintes sur les proportions des bases :

o contraintes hydrauliques (inégalités): chaque voie i peut fournir un débit compris entre $F_i^{min}$ et $F_i^{max}$. Pour un débit d'allure courant F, il faut, pour chaque base :

$$u_i^{p,min} = \frac{F_i^{min}}{F} \leq u_i \leq u_i^{p,max} = \frac{F_i^{max}}{F}$$

o contraintes d'ordonnancement (inégalités) : elles correspondent aux incorporations minimales et maximales pour chaque base (proportions dont la somme est égale à 1). Pour le mode instantané, ceci se traduit par des contraintes minimales $u_i^{0,min}$ et maximales $u_i^{0,max}$.

o contraintes de variation d'incorporation (inégalités) : la proportion de chaque base i ne peut pas évoluer en proportion de plus de $\delta u_i^b$ à la baisse et de plus de $\delta u_i^h$ à la hausse. Ainsi, si la proportion à l'appel précédent valait $u_i$, la commande courante doit être supérieure à $u_i^{\delta,min} = u_i(1 - \delta u_i^b)$ et inférieure à $u_i^{\delta,max} = u_i(1 - \delta u_i^h)$.

o contrainte égalité de débit total constant (la somme des proportions des bases doit être égale à 1).

(2) des contraintes sur les propriétés du mélange :

o contraintes inégalités associées aux équations de régulation exprimant que la valeur y mesurée doit rejoindre sa consigne $y_{sp}$ (pouvant éventuellement se formuler sous la forme de contraintes inégalités moyennant l'introduction de tolérances, une formulation de type contrainte égalité est requise, si on n'a pas recours à ces tolérances).

o Contraintes inégalités pour maintenir les valeurs des propriétés mesurées à l'intérieur d'une fourchette minimale/maximale, afin de respecter les spécifications et limiter la sur-spécification.

Dans ce problème, le critère visé peut s'exprimer comme un écart à la recette initiale que l'on cherchera à minimiser tout en s'assurant que toutes les contraintes précisées ci-dessus ont été respectées.

Lorsque le problème P0 n'est pas solvable, (infaisabilité du mélange pour tenir l'ensemble des spécifications demandées), une séquence d'optimisation en trois étapes P1, P2, P3 se déclenche.

**Problème P1 gestion des contraintes dures**

Le problème P1 est mis en oeuvre au cours de l'étape (b) du procédé d'optimisation décrit précédemment.

On détermine ainsi une recette u pour laquelle le problème de régulation minimal P1 est résolu, qui ne prend en compte que des contraintes du problème P0 définies comme prioritaires. Ce problème P1 met en oeuvre une succession de problèmes d'optimisation, normalement faisables, dont les critères consistent à pénaliser la violation desdites contraintes prioritaires, afin de définir de nouvelles valeurs atteignables pour ces contraintes prioritaires.

Ces critères correspondent à des contraintes hiérarchisées prioritaires de type inégalités sur les propriétés surveillées, de préférence des contraintes hiérarchisées de rang dur, prioritaire par rapport aux objectifs de régulation, et induisant des coûts de non respect des spécifications de qualité.

Ce problème P1 concerne la gestion des contraintes dures (contraintes sur les proportions des bases et contraintes prioritaires sur les propriétés du mélange), de manière itérative, par priorités décroissantes. Plusieurs contraintes pouvant avoir la même priorité, la gestion itérative travaille par ensemble de contraintes d'égales priorités.

A chaque contrainte est associé un rang. Par convention, plus le rang associé à la contrainte est faible, moins la contrainte est prioritaire. Les rangs dits positifs sont associés à des contraintes prioritaires, tandis que les rangs dits négatifs sont associés à des contraintes non prioritaires.

Soit une partition de $H = H_m \cup H_M$ en p sous ensemble Hi tous non vides, regroupant chacun des indices correspondant à des sorties sujettes à des contraintes dures d'égales priorités. Par construction, $p \leq card(H)$,

$$U_{i=1}^{p} H_i = H$$ et $H_i \cap H_j = \varnothing, \forall_j \neq i$. Les contraintes relatives à $H_j$ sont moins prioritaires que celles relatives à $H_i$ dès que

i<j. On note aussi $H_{1j} = \bar{U}_{i=1}^{j} H_J$ .

*Itération* 1: traitement des contraintes les plus prioritaires, associées à $H_1$.

Il faut résoudre:

$$\min_{u,\varsigma} \left\| \hat{B}_{H_1} u + \varsigma - y_{H_1}^{max} \right\|^2$$

$$\begin{cases} u^{min} \leq u \leq u^{max} \\ \varsigma \geq 0 \\ \sum_{i=1}^{n} u_i = 1 \end{cases}$$

avec $\zeta$, vecteur de variable d'écart (vecteur "slack") qui permet d'augmenter la dimension du vecteur d'optimisation (u, $\zeta$) et de calculer un dépassement optimal, correspondant aux relaxations de contraintes.

Ce problème a une solution quand la valeur initiale de u satisfait les bornes et la contrainte égalité sur la somme de ses éléments, ce qui est toujours le cas.

La solution (u*, $\zeta$*) permet de relaxer le problème d'optimisation le cas échéant.

En itérant sur les card($H_1$) éléments $\zeta_j$ de $\zeta$, les valeurs atteignables $y_{H_1}^{max,att}$ sont définies de la manière suivante:

- si $\zeta_j > 0$, alors la valeur atteignable est la valeur initiale de la contrainte,
- si $\zeta_j = 0$, alors la valeur atteignable est $\hat{B}_j u^*$.

Itération k+1:

A la (k+1)$^{\text{ième}}$ itération, le problème suivant est résolu:

$$\min_{u, \varsigma} \left\| \hat{B}_{H_{k+1}} u + \varsigma - y_{H_{k+1}}^{\max} \right\|^2$$

$$\begin{cases} u^{\min} \leq u \leq u^{\max} \\ \varsigma \geq 0 \\ \sum_{i=1}^{n} u_i = 1 \\ \hat{B}_{H_{1k}} u \leq y_{H_{1k}}^{\max, \text{att}} \end{cases}$$

Ce problème a toujours une solution, puisque des valeurs atteignables ont été définies aux k itérations précédentes pour les contraintes relatives aux ensembles $H_1$ à $H_k$.

Comme aux itérations précédentes, la solution $(u^*, \zeta^*)$ permet de relaxer le problème d'optimisation le cas échéant. En itérant sur les card($H_{k+1}$) éléments $\zeta_j$ de $\zeta$, les valeurs atteignables $y_{H_{k+1}}^{\max, \text{att}}$ sont définies de la manière suivante:

- si $\zeta_j > 0$, alors la valeur atteignable est la valeur initiale de la contrainte,
- si $\zeta_j = 0$, alors la valeur atteignable est $\hat{B}_j u^*$.

Le problème est entièrement résolu lorsque les p sous ensembles de contraintes de priorités décroissantes ont été abordés lors de p itérations.

Ainsi, la séquence P1 permet, par optimisations successives, de résoudre les contraintes dures (contraintes sur les proportions des bases et contraintes de rang positif sur les propriétés du mélange). En cas d'infaisabilité, les contraintes de rang les moins prioritaires sont relaxées. Les rangs sont utilisés lorsqu'on .ne peut pas satisfaire tout ce qui est demandé. Les contraintes dures ont un poids plus important que les objectifs de régulation sur consigne fixe. Les contraintes douces de rang négatif sont ignorées. L'optimisation de recette reste inactive dans cette séquence.

**Problème P2 : gestion des références**

Le problème P2 est mis en oeuvre au cours de l'étape (c) du procédé d'optimisation décrit précédemment.

On détermine ainsi une recette u pour laquelle le problème de régulation P2 est résolu, qui prend en compte lesdites nouvelles valeurs atteignables des contraintes prioritaires du problème P0 ainsi que des contraintes non prioritaires du problème P0. Ce problème P2 met en oeuvre un problème d'optimisation dont les critères consistent à pénaliser la violation desdites contraintes non prioritaires, afin de définir de nouvelles valeurs atteignables pour ces contraintes non prioritaires.

Ces critères correspondent à des contraintes. égalités sur les propriétés régulées sur consigne fixe, de préférence des contraintes de rang doux non prioritaire par rapport aux objectifs de régulation, mais induisant une surqualité.

Cette séquence comporte l'ensemble des contraintes dures, avec des bornes dont la valeur a été éventuellement relaxée lors de la séquence P1. Le problème P2 cherche à satisfaire au mieux les équations de la régulation, quitte, le cas échéant, à relaxer la consigne en consigne atteignable. Ces équations sont toutes traitées simultanément (cette séquence P2 n'est pas itérative).

Une orientation des relaxations est néanmoins possible, en introduisant dans le critère un vecteur de pondération utilisant des poids relatifs caractéristiques de l'importance relative des propriétés, afin de relaxer de façon préférentielle les propriétés les moins importantes.

Les contraintes douces de rang négatif sont ignorées, et l'optimisation de la recette reste inactive.

Il s'agit de résoudre :

$$\min_{u} \| \hat{B}_R u - y_R^{\text{ref}} \|^2$$
$$\begin{cases} u^{\text{min}} \leq u \leq u^{\text{max}} \\ \sum_{i=1}^{n} u_i = 1 \\ \hat{B}_H u \leq y_H^{\text{max,att}} \end{cases}$$

Ce problème a toujours une solution u* puisque toutes les contraintes dures ont été relaxées lors de la résolution du problème P1. Les références atteignables sont calculées comme $y_R^{\text{réf,att}} = \hat{B}_R u^{*}$.

**Problème P3 : Gestion des contraintes douces**

Le problème P3 est mis en oeuvre au cours de l'étape (d) du procédé d'optimisation décrit précédemment.

On détermine une recette u pour laquelle un problème de régulation P3 est résolu, qui prend en compte lesdites nouvelles valeurs atteignables des contraintes prioritaires du problème P0 obtenues à l'étape (b), lesdites nouvelles valeurs atteignables des contraintes non prioritaires obtenues à l'étape (c), ainsi que toutes les autres contraintes non prioritaires du problème P0 et non traitées par les problèmes P1 et P2. Ce problème P3 met en oeuvre une succession de problèmes d'optimisation, normalement faisables, dont les critères consistent à pénaliser la violation desdites autres contraintes non prioritaires, afin de définir de nouvelles valeurs atteignables pour ces autres contraintes non prioritaires.

Ces critères correspondent à des contraintes hiérarchisées non prioritaires de type inégalité sur les propriétés surveillées.

Ce problème concerne la gestion des contraintes douces de manière itérative, il s'agit d'une gestion séquentielle par paquets de contraintes de priorités décroissantes. De manière analogue au problème P1, les sous-ensembles $S_i$ de $S = S_m \cup S_M$ sont introduits.

*Itération 1:* traitement des contraintes les plus prioritaires, associées à $S_1$.

Il faut résoudre

$$\min_{u,\varsigma} \left\| \hat{B}_{S_1} u + \varsigma - y_{S_1}^{\text{max}} \right\|^2$$

$$\begin{cases} u^{\text{min}} \leq u \leq u^{\text{max}} \\ \varsigma \geq 0 \\ \sum_{i=1}^{n} u_i = 1 \\ \hat{B}_H u \leq y_H^{\text{max,att}} \\ \hat{B}_R u = y_R^{\text{Réf,att}} \end{cases}$$

La solution (u*, ζ*) permet de relaxer le problème d'optimisation le cas échéant. En itérant sur les card($S_1$) élément $\zeta_j$ de ζ, les valeurs atteignables $y_{S_1}^{\text{max,att}}$ sont définies de la manière suivante :

   - si $\zeta_j > 0$, alors la valeur atteignable est la valeur initiale de la contrainte,
   - si $\zeta_j = 0$, alors la valeur atteignable est $\hat{B}_j u^*$.

*Itération k+1 :*

à la (k+1)[ième] itération, le problème suivant est résolu :

$$\min_{u,\varsigma} \left\| \bar{B}_{S_{k+1}}u + \varsigma - y_{S_{k+1}}^{max} \right\|^2$$

$$\begin{cases} u^{min} \leq u \leq u^{max} \\ \varsigma \geq 0 \\ \sum_{i=1}^{n} u_i = 1 \\ \hat{B}_H u \leq y_H^{max,att} \\ \hat{B}_R u = y_R^{R\acute{e}f,att} \\ \hat{B}_{S_{1k}} u \leq y_{S_{1k}}^{max,att} \end{cases}$$

Comme aux itérations précédentes, la solution (u*, ζ*) permet de relaxer le problème d'optimisation le cas échéant. En itérant sur les card($S_{k+1}$) éléments $\zeta_j$ de ζ, les valeurs atteignables $y_{S_{k+1}}^{max,att}$ sont définies de la manière suivante :

- si $\zeta_j > 0$, alors la valeur atteignable est la valeur initiale de la contrainte,
- si $\zeta_j = 0$, alors la valeur atteignable est $\hat{B}_j u^*$.

Le problème est entièrement résolu lorsque les sous ensembles de contraintes de priorités décroissantes ont tous été abordés.

Cette séquence P3 permet de prendre en compte, si possible, les contraintes douces, selon leur rang, tout en respectant les équations de régulation (éventuellement relaxées), sous contraintes sur les proportions des bases et contraintes dures éventuellement relaxées sur les propriétés du mélange.

Les contraintes de rang identique sont traitées simultanément dans les séquences d'optimisations. L'optimisation de recette reste inactive.

La résolution globale du problème d'optimisation est terminée après la dernière itération du problème P3, dont la partie u* de la solution est la commande calculée, à appliquer sur la mélangeuse.

De préférence, pour chaque problème, sont garanties la non-violation des contraintes sur les proportions des bases ainsi que la non-violation de la contrainte sur la somme des proportions des bases, qui doit valoir 1. Ces contraintes sont alors toujours prises en compte.

La figure 3 représente le séquencement des problèmes d'optimisation P0 à P3 définis ci-dessus.

Si la résolution numérique du problème initial P0 n'a pas fourni de solution, la résolution séquentielle des problèmes P1, P2 et P3 est lancée. Bien que ces problèmes aient théoriquement toujours une solution, leur résolution numérique peut échouer. La recette appliquée sur le procédé en fonction des échecs de résolution est la suivante (voir figure 3) :

Cas 1 : la recette appliquée est le résultat du problème d'optimisation initial,
Cas 2 : la recette appliquée est la recette actuelle,
Cas 3 : la recette appliquée est le résultat de calcul de P1
Cas 4 : la recette appliquée est le résultat de calcul de P2
Cas 5 : la recette appliquée est le résultat de calcul de P3

Lors d'un échec de la résolution numérique pour les problèmes P1 à P3, et lors d'une relaxation persistante de contrainte dure lors de la solution du problème P1, une surveillance des sorties est activée. Cette surveillance consiste à vérifier que :

- les sorties $y_i$ associées à une consigne $y^c_i$ restent dans la zone comprise entre $y_i^c - t^c$ et $y_i^c + t^c$, où $t^c$ est une tolérance définie par l'utilisateur,
- les sorties uniquement associées à des bornes minimale $y^{min}$ et/ou maximale $y^{max}$ ne dépassent pas les valeurs $y^{min} - t^{min}$ et/ou $y^{max} + t^{max}$, où $t^{min}$ et $t^{max}$ sont des seuils définis par l'utilisateur.

Si un seuil est franchi, la commande du mélange est arrêtée.

On remarquera, que les problèmes d'optimisation sont codés en utilisant l'écart e par rapport à la recette initiale $u^0$, et non directement dans la variable u.

En revanche l'estimateur de propriété est lui codé en utilisant un codage en u et non en écart e, ce qui permet de s'affranchir du recours aux mesures initiales de début de mélange, souvent sujette à des imprécisions.

De plus, le codage dans la variable u selon l'invention est parfaitement compatible avec la rétroaction selon l'invention décrite plus haut.

On notera qu'une mise à l'échelle des équations intervenant dans les problèmes d'optimisation posés permet de s'affranchir de problèmes de conditionnement numérique, compte tenu d'ordres de grandeur éventuellement différents des propriétés considérées.

Cette mise à l'échelle consiste à utiliser un facteur d'échelle multiplicatif appliqué sur les membres de droite et de gauche des différentes contraintes.

Ce facteur est ajusté en fonction de la propriété considérée :

Cette mise à l'échelle s'opère en effet en utilisant comme valeur de normalisation une moyenne entre les valeurs extrêmes (minimales et maximales) des qualités des constituants, (lorsque la propriété n'est pas associée à une valeur de consigne).

On utilisera en outre comme valeur de normalisation une moyenne entre la moyenne des valeurs extrêmes (minimales et maximales) des qualités des constituants, d'une part et une valeur de consigne éventuelle ( lorsque la propriété est associée à une valeur de consigne).

En outre, une normalisation est également appliquée dans les critères d'optimisation P1, P2, P3.

La norme utilisée correspond à une forme quadratique définie par une matrice diagonale, dont les termes diagonaux sont les carrés des inverses des facteurs d'échelles calculés.

**Exemple 4 : optimisation en mode intégré**

<u>**a.**</u> Contraintes sur les propriétés du mélange

Lorsque le mode de commande est le mode instantané, les contraintes définies sur les propriétés du mélange par l'utilisateur sont celles utilisées pour l'optimisation, notamment les objectifs sont directement des consignes fournies par l'utilisateur.

En mode de commande intégré, l'utilisateur peut considérer que ce qui compte est la gestion des contraintes non pas sur les caractéristiques du mélange instantané, mais sur les caractéristiques du volume total coulé dans le bac depuis le début du mélange en mode intégré mélange, et sur les caractéristiques du volume total du bac en mode intégré sur bac. Ceci laisse de la latitude sur la définition des contraintes instantanées utilisées pour l'optimisation.

Il est évidemment possible de prendre les valeurs définies par l'utilisateur pour les contraintes associées au volume total coulé, mais celles-ci peuvent être relaxées, comme le détaillent les lignes qui suivent.

Si la valeur intégrée courante de la propriété du mélange est notée $z^k$, et celle à l'itération k+1, $z^{k+1}$, pour un volume courant $V^k$, un débit courant $F^k$ et une période de passage T (ou plusieurs périodes assimilées à un horizon glissant), la valeur courante $y^k$ de la propriété en sortie de mélangeuse permet de relier $z^k$ à $z^{k+1}$ selon :

$$V^k z^k + F^k T y^k = (V^k + F^k T) z^{k+1}$$

Si la contrainte fournie par l'utilisateur est $z^{max}$ (le traitement décrit est similaire pour les contraintes minimales), il faut qu'à l'itération courante :

$$y^k \leq \frac{(V^k + F^k T) z^{max} - V^k z^k}{F^k T} .$$

Le second membre de cette inégalité fournit une borne maximale pour $y^k$ qui peut être très différente de $z^{max}$, mais peut toutefois servir pour éviter de sur-contraindre la commande instantanée en choisissant $y^{max} = z^{max}$. Par contre, il n'est pas souhaitable d'appliquer cette borne lorsqu'elle est trop différente de $z^{max}$ : une relaxation de $y^{max}$ plus grande que $z^{max}+t$ n'est pas autorisée, $z^{max}$ étant la contrainte saisie par l'utilisateur et t une tolérance définie aussi par l'utilisateur.

**b.** Gestion des références

En mode instantané, les propriétés régulées sont les propriétés en sortie de mélangeuse. Dans ce cas les références utilisées durant l'optimisation sont égales aux consignes définies par l'utilisateur.

En mode intégré fond de bac, les propriétés régulées sont les propriétés du bac de destination dans lequel coule le mélange. Les consignes définies par l'utilisateur se rapportent aux propriétés du bac. Pour l'optimisation, les références sont calculées à partir de ces consignes.

Il est également possible de réguler certaines propriétés en mode instantané et d'autres en mode intégré.

- Cas où le bac de destination du mélange est vide en début de mélange (ou mode intégré "mélange", par distinction du "mode intégré sur bac").

Notations :

- $y_j(t)$, valeur de la propriété j en sortie de mélangeuse au temps t;
- $z_j(t)$, valeur de la propriété j intégrée du volume coulé, correspondant ici à la propriété j intégrée du mélange au temps t ;
- $V(t)$, volume coulé depuis le début du mélange, correspondant ici au volume du mélange au temps t ;
- $F(t)$, débit volumique total de la mélangeuse au temps t.

Par simple bilan de matière,

$$\frac{dV(t)}{dt} = F(t) \text{ et } \frac{d(V(t)z_j(t))}{dt} = F(t)y_j(t)$$

Soient les temps $t_0$ et $t_1$, $t_1 \geq t_0$, si $y_j$ et $F$ sont constants entre $t_0$ et $t_1$, alors :

$$V(t_1) = V(t_0) + F(t_0)(t_1 - t_0),$$

et

$$F(t_0)(t_1 - t_0) \, y_j(t_0) + V(t_0) \, z_j(t_0) = (V(t_0) + F(t_0)(t_1 - t_0)) \, z_j(t_1)$$

Définir une référence revient à calculer la valeur constante $y_j^{réf}$ que doit prendre la propriété en sortie de mélangeuse, pour qu'au bout du temps H (horizon glissant choisi par l'utilisateur) à partir du temps courant t, la propriété intégrée $z_j$ passe de sa valeur courante $z_j(t)$ à sa valeur de consigne $z_j^c$.

Ainsi, il faut que

$$F(t)Hy_j^{réf} + V(t)z_j(t) = (V(t) + F(t)H)z_j^c$$

Soit

$$y_j^{réf} = z_j^c + \frac{V(t)}{F(t)H}(z_j^c - z_j(t))$$

A chaque itération, la référence est remise à jour à partir de cette formule (horizon glissant).

- Cas où le bac de destination du mélange n'est pas vide en début de mélange.

Le calcul des trajectoires doit être modifié.

Soit Vo, le volume initial, et $z_{j0}$, la valeur initiale de la propriété j dans le bac, alors :

$$F(t)Hy_j^{réf} + V(t)z_j(t) + V_0 z_{jo} = (V_0 + V(t) + F(t)H)z_j^c$$

où V(t) est le volume coulé depuis le début du mélange, correspondant ici au volume du mélange au temps t.

Afin d'éviter un saut de la référence, il préférable de prendre en compte progressivement, et non en une seule fois, le volume du fond de bac.

Pour cela, on définit une consigne virtuelle $z_j^{cv}$, telle que :

$$z_j^{cv} = z_j^c + a \frac{V_0}{V(t) + F(t)H}(z_j^c - z_{j0})$$

Lorsque a vaut 0, il n'y a pas de fond de bac.

Lorsque a vaut 1, l'ensemble du fond de bac est pris en compte. Il suffit donc de faire passer a de 0 à 1 suivant une certaine trajectoire, pré-définie, pour prendre en compte progressivement le fond de bac.

**Exemple 5** : **gestion des additifs.**

Les additifs (ou dopes), injectés en faible quantité, agissent essentiellement, mais fortement, sur une des propriétés du mélange. Quand il n'y a pas de contrainte sur le débit d'additif, la propriété dopée peut être complètement écartée du problème de commande multivariable des séquences d'optimisation. Un régulateur monovariable agissant sur le débit de l'additif est alors utilisé pour réguler cette propriété. Il s'agit par exemple du contrôleur d'injection d'additif 18 du dispositif décrit plus haut. Le fonctionnement d'un tel régulateur est décrit ci-après.

Les remarques préliminaires suivantes sont à noter :

- l'effet sur la propriété affectée de l'injection d'un dope est considéré comme instantané. Cependant, pour toute propriété il existe un retard de mesure, qui peut dépendre de la valeur mesurée. On supposera, ce qui est le cas en pratique, qu'il est possible de lier le retard de mesure à la valeur mesurée,
- l'effet d'un dope sur une propriété est assez mal quantifié. Il est variable en fonction de la valeur courante de la propriété dopée. On supposera qu'il est possible de lier, même de manière peu précise et pour chaque valeur prise par la propriété dopée, la variation du débit de dope à la variation de là valeur de la propriété dopée.

Le modèle utilisé s'écrit :

$$\frac{dy}{dt} = K(y)\frac{dv}{dt},$$

où

- ● y est la valeur mesurée de la propriété dopée
- ● v est le débit de dope,
- o K est un gain qui dépend de la valeur courante de la propriété dopée. On supposera disposer d'une fonction de y constante par morceaux pour décrire ce gain.

D'un point de vue discret, à l'itération k :

$$\Delta y^k = K(y^k)\Delta v^k.$$

Pour que la sortie, dont la valeur courante est $y^k$, tende vers sa valeur de référence $y^{réf,r}$, il suffit que $\Delta v^k = (y^{réf,r} - y^k) / K(y^k)$. Cependant la valeur de la sortie disponible en k n'est pas la valeur courante, en raison du retard de mesure. Il faut alors se baser pour le calcul de la commande sur une estimation $\hat{y}^k$ de la sortie, et calculer la commande par :

$$\Delta v^k \; = \; (y^{r\acute{e}f,r} \; - \; \hat{y}^k) \, / \, K(\hat{y}^k)$$

L'estimation $\hat{y}^k$ est la somme de deux termes :

- une estimation en boucle ouverte $K.\hat{x}^k$ (qui utilise $K(\hat{y}^k)$),
- un biais filtré $\bar{b}^k$, résultat du filtrage au premier ordre d'un biais instantané, écart synchronisé entre mesure et prédiction boucle ouverte.

A toute mesure $y^k$ correspond un retard de mesure $\delta T$, où T est la période d'échantillonnage de la commande. On suppose qu'une fonction de y constante par morceaux décrit ce retard. La mesure $y^k$ correspond ainsi à une prédiction en boucle ouverte $\hat{x}^{k-\delta}$, qui permet de calculer le biais instantané $b^k = y^k - \hat{x}^{k-\delta}$. Le coefficient de filtrage est fixé de manière automatique en fonction du retard de mesure.

Pour la commande, les contraintes suivantes sont gérées :

- variation maximale de l'injection par passage, à la hausse ou à la baisse,
- injections minimale et maximale.

En régulation de valeur instantanée, il n'est pas possible de saisir une consigne à l'extérieur des extrema fixés par l'utilisateur.

En régulation de la valeur intégrée, la trajectoire de référence, qui inclue éventuellement la prise en compte des fonds de bacs, est calculée de manière analogue à celles mises en oeuvre pour la commande multivariable. En particulier, la référence instantanée calculée à partir de la consigne ne peut pas sortir des extrema fixés par l'utilisateur. En pratique, ceci permet de respecter les contraintes fixées sur la propriété régulée.

Il est possible, lorsque le débit de dope est saturé (lorsque la commande reste égale au minimum ou au maximum pendant un temps prédéterminé), de basculer vers une régulation de la propriété dopée par les bases.

Dans ce cas, le débit de dope reste égal à la valeur prise avant le basculement.

Pour une sortie dopée, l'effet cumulé dû au dope entre le temps 0 de début de mélange et le temps t, s'écrit :

$$d \; = \; \int_0^t K(\bar{y}(\tau)) \, \frac{dv}{d\tau} \, (\tau) d\tau$$

Soit, d'un point de vue discret,

$$d^k \; = \; d^{k-1} \; + \; K(\hat{y}^k)\Delta v^k$$

Lors du basculement vers une régulation de la propriété j par les bases, le modèle de commande prend en compte cet effet et s'écrit :

$$y_j \; = \; \hat{B}_j u \; + \; d$$

Cette expression est utilisée à la fois dans les optimisations successives et dans la dynamique de $\hat{B}_j$ du système de rétroaction.

**Exemple 6 :** optimisation de la recette

Lorsqu'il reste des degrés de liberté dans la résolution des équations utilisées dans l'optimisation, il est possible d'optimiser la préparation du mélange en modifiant la recette, c'est-à-dire les proportions respectives de chaque base. Différentes options d'optimisation de la recette sont décrites dans cet exemple, pour les séquences d'optimisation décrites dans l'exemple 3.

Dans le problème d'optimisation initial P0 décrit dans l'exemple 3, il est question de minimiser le terme $\|u - \bar{u}\|^2$.

La valeur de la recette de référence $\bar{u}$ dans cette expression dépend du mode d'optimisation choisi par l'utilisateur.

(a) <u>En absence d'optimisation</u>

$\overline{u}$ est simplement égale à la valeur initiale, c'est-à-dire la recette fournie par l'utilisateur pour le début du mélange.

$\overline{u}$ peut également être définie comme une recette "suiveuse", sa valeur est alors égale à la valeur moyenne de u depuis le début du mélange.

(b) <u>Optimisation de l'incorporation de certaines bases</u>

Il est possible de maximiser ou de minimiser l'incorporation de certaines bases, en excès ou au contraire peu disponibles sur le site de production. Dans ce cas, il faut associer à la recette u un vecteur $\pi$ de priorités.

Celui-ci comporte des entrées positives pour les bases à maximiser et des entrées négatives pour les bases à minimiser. Les bases pour lesquelles il n'est pas souhaitable de maximiser ou minimiser l'incorporation ont une priorité nulle.

Soit donc $\pi = (\pi_1,..., \pi_n)^t$ et $|\pi_j| = \max_{i=1,n}|\pi_i|$, supposé non nul.

En notant $u^f$ la valeur filtrée de u, nous utilisons $\overline{u} = u^f + \pi'^f$, $\pi'^f$ étant la valeur filtrée de :

$$\pi' \;=\; (\pi_1 \,/|\pi_j|,\ldots,\, \pi_n \,/|\pi_j|)^t$$

Ce filtre de $\pi'$ permet de prendre en compte de manière progressive les variations de recette pendant le mélange.

(c) <u>Optimisation du coût du mélange</u>

On associe à u un vecteur de prix, $\xi = (\xi_1,..., \xi_n)^t$. A chaque passage est défini un coût de la recette, à partir de la recette filtrée $u^f$ : $c = \xi^t u^f$.

Ensuite, (c : non nul) un vecteur $\xi'$ est définit par :

$$\xi' \;=\; ((1 \,-\, \xi_1/c),\ldots,\, (1 \,-\, \xi_n/c))^t.$$

Ainsi $\xi'_i$, défini par $\xi_i' \;=\; (1 \,-\, \xi_i/c)$, est positif si le coût de la base est inférieur au coût de la recette filtrée courante : dans ce cas, il faut chercher à incorporer cette base pour limiter le coût de la recette. Inversement, $\xi'_i$ est négatif si le coût de la base est supérieur au coût de la recette.

Pour l'optimisation, $\overline{u} = u^f + \xi'$.

(d) <u>Saturation des spécifications sur les sorties</u>

Dans ce cas, $\overline{u}$ est égal à la recette initiale, mais en fait n'a que peu d'importance. En effet, si le problème initial P0 a une solution, alors est lancé le problème itératif décrit ci-dessous.

Considérons M={1, 2, ..., m}, l'ensemble des indices attribués aux sorties et P, le sous-ensemble des indices indiquant les sorties impliquées dans le processus d'optimisation.

A chaque élément j de P sont associés :

- un élément de H, autrement dit :

soit une valeur maximale à ne pas dépasser,
soit une valeur minimale à ne pas dépasser.

- un seuil $d_j$ par rapport à la contrainte.

Soit une partition de P en p sous-ensembles $P_i$ tous non vides, regroupant chacun des indices correspondants à des sorties sujettes à des besoins d'optimisation d'égales priorités. Par construction, $p \leq \text{card}(P)$, $\bigcup_{i=1}^{p} P_i \;=\; P$ et $P_i \cap P_j = \emptyset$, $\forall j \neq i$.

Les optimisations relatives à Pj sont moins prioritaires que celles relatives à $P_i$ dès que i<j. Notons aussi

$$P_{1j} = \bigcup_{i=1}^{j} H_j.$$

Itération 1

A la première itération, on cherche à rapprocher les sorties correspondant à $P_1$ de leurs contraintes :

$$\min_u \|\hat{B}_{P_1} u - y_{P_1}^{\max} + d_{P_1}\|^2$$
$$\begin{cases} u^{\min} \leq u \leq u^{\max} \\ \sum_{i=1}^{n} u_i = 1 \\ \hat{B}_R u = y_R^{\text{ref}} \\ \hat{B}_H u \leq y_H^{\max} \\ \hat{B}_S u \leq y_S^{\max} \end{cases}$$

La solution u* permet de calculer $y_{P_1}^{\min} = \hat{B}_{P_1} u^{\cdot}$.

Itération k+1

A la (k+1)ème itération, le problème suivant est résolu :

$$\min_u \|\hat{B}_{P_{k+1}} u - y_{P_{k+1}}^{\max} + d_{P_{k+1}}\|^2$$
$$\begin{cases} u^{\min} \leq u \leq u^{\max} \\ \sum_{i=1}^{n} u_i = 1 \\ \hat{B}_R u = y_R^{\text{ref}} \\ \hat{B}_H u \leq y_H^{\max} \\ \hat{B}_S u \leq y_S^{\max} \\ \hat{B}_{P_{1k}} u \geq y_{P_{1k}}^{\min} \end{cases}$$

Le problème est entièrement résolu lorsque les p sous-ensembles de contraintes de priorités décroissantes ont été abordés lors de p itérations. Alors, les sorties sont les plus proches possibles de leurs contraintes.

**Exemple 7 :** Pilotage de mélangeuse de charge d'hydrodésulfurisation en continu

L'exemple 7 montre la régulation de la valeur instantanée de teneur en soufre pour un mélange élaboré à partir de plusieurs bases.
On pourra ici noter que cette régulation du soufre s'accompagne en parallèle de la régulation et de la surveillance en zone d'autres propriétés de mélange, dans un contexte de commande multivariable.
Cet exemple illustre la capacité du dispositif à assurer un contrôle en instantané et en continu, pour agir sur la composition de charge d'une unité d'hydro-désulfuration des gazoles, afin de piloter les propriétés du mélange en sortie d'unité.
Il illustre également la capacité du dispositif à gérer des schémas amont mélangeuses complexes, avec plusieurs pré-mélanges des constituants.
Les éléments suivants sont pris en compte :

- retards analyseurs : 5 minutes pour la densité, la teneur en soufre (estimateur recalé sur l'analyseur correspondant), le pourcent distillé (calculé), 10 minutes pour le point d'éclair et 15 minutes pour le point de trouble.
- Volumes morts de transit d'unité : 96 m3,
- Volumes morts de pré-mélange : 16,8 m$^3$ et 10,9 m$^3$ au premier étage, 4,5 m$^3$ au second étage, 10,8 m$^3$ et 1,4

m$^3$ au troisième étage de pré-mélange.

Les constituants de charge sont les suivants :

Base 1 : Kerosène
Base 2 : Kérosène basse teneur en soufre
Base 3 : gazole léger basse et haute teneur en soufre, provenant d'une distillation atmosphérique
Base 4 : gazole moyen provenant de distillations atmosphérique et sous vide
Base 5 : base oléfinique LLCO de FCC, provenant d'un bac intermédiaire
Base 6 : essence lourde de FCC

D'autres bases sont susceptibles d'intervenir en charge de l'unité : jets directs LLCO, HLCO, HCCS de FCC, jet direct de gazole de viscoréduction GOSV (flux direct d'unité), recycle de l'unité.

Les caractéristiques mesurées en laboratoire des bases 1 à 5 sont données dans le tableau 2 suivant :

**Tableau 2 :** caractéristiques des bases de l'exemple 7

|  | Base 1 | Base 2 | Base 3 | Base 4 | Base 5 |
|---|---|---|---|---|---|
| **Densité (à 15˚C)** | 0,7995 | 0,8279 | 0,8558 | 0,883 | 0,835 |
| **Point d'éclair (˚C)** | 42,5 | 66 | 77 | 52,5 | 50 |
| **Point de Trouble (˚C)** | -48,09 | -19,9 | 8,401 | -29,96 | -30,97 |
| **Indice de Cétane** | 45,97 | 54,8 | 57,77 | 25,3 | 23,5 |
| **Pourcent distillé (à 360˚C) (%)** | 100 | 100 | 89,8 | 100 | 100 |
| **Teneur en soufre (ppm)** | -19,39 | 54,9 | 99,71 | 40,08 | 30,03 |

Les seuils minima sont doux pour l'ensemble des propriétés sauf pour le point d'éclair et l'indice de cétane.

Les seuils maxima sont durs pour l'ensemble des propriétés, sauf pour l'indice de cétane, le point d'éclair et le pourcent distillé.

Les valeurs de ces seuils maximum et minimum utilisés pour les différentes propriétés sont les suivantes :

**Tableau 3 :** valeurs des seuils maximum et minimum des propriétés du mélange de l'exemple 7 :

| propriété : | Seuil maximum | Seuil minimum |
|---|---|---|
| Densité | 0.844 | 0.82 |
| Point d'éclair (˚C) | 65 | 57 |
| Point de Trouble (˚C) | -6 | -15 |
| Indice de cétane | 53 | 46.5 |
| Pourcent distillé (%) | 100 | 95 |
| Teneur en Soufre (ppm) | 48 | 30 |

Les horizons de trajectoire de référence utilisés sont définis comme étant égaux à deux fois le retard analyseur, augmenté de valeurs paramétrables appelées des horizons réduits. Les horizons réduits utilisés sont les suivants : 10 minutes pour la densité, l'indice de cétane, la teneur en soufre, et le pourcent distillé, 20 minutes pour le point d'éclair, et 30 minutes pour le point de trouble.

Les coefficients de filtrage utilisés pour le réglage de l'estimateur sont les suivantes : 15 minutes pour la densité, l'indice de cétane, le pourcent distillé et la teneur en soufre, 30 minutes pour le point d'éclair, et 45 minutes pour le point de trouble. Ces coefficients de filtrage, (inverses des $\beta_i$ apparaissant dans les formules (1) et (2) définies plus haut), correspondent aux paramètres composantes du vecteur $\beta$ utilisés dans les équations différentielles de l'estimateur, permettant de piloter la dynamique de convergence (plus ou moins rapide), propriété par propriété.

Des objectifs d'optimisation de recette sont également utilisés pour maximiser l'utilisation des bases 1 (kérosène) et 4 (gazole moyen de distillation).

Au début du mélange, les valeurs minimale et maximale de la teneur en soufre sont respectivement de 30 et 48 ppm. Les seuils sont ensuite modifiés et passent respectivement à 2 et 8 ppm. Le soufre est régulé "en zone" à l'intérieur de ses bornes minimale et maximale. C'est ce passage des seuils de [30, 48] à [2, 8] qui permet la bascule de la marche de 50 ppm (on vise ici une teneur en soufre proche de 48 ppm pour avoir une marge de fabrication de 2 ppm) vers la marche de 10 ppm (on vise ici une teneur en soufre proche de 8 ppm pour avoir une marge de fabrication de 2 ppm).

La topologie du mélange est précisée dans le tableau 4.

**Tableau 4 :** topologie du mélange de l'exemple 7 :

| Base 1 (75) | Mélange A = bases 1 + 2 | | Mélange final = A + C + Base 6 |
|---|---|---|---|
| Base 2 (121) | | | |
| Base 3 (79) | Mélange B = bases 3 + 4 | Mélange C = B + base 5 | |
| Base 4 (74) | | | |
| Base 5 (63) | | | |
| Base 6 (8) | | | |

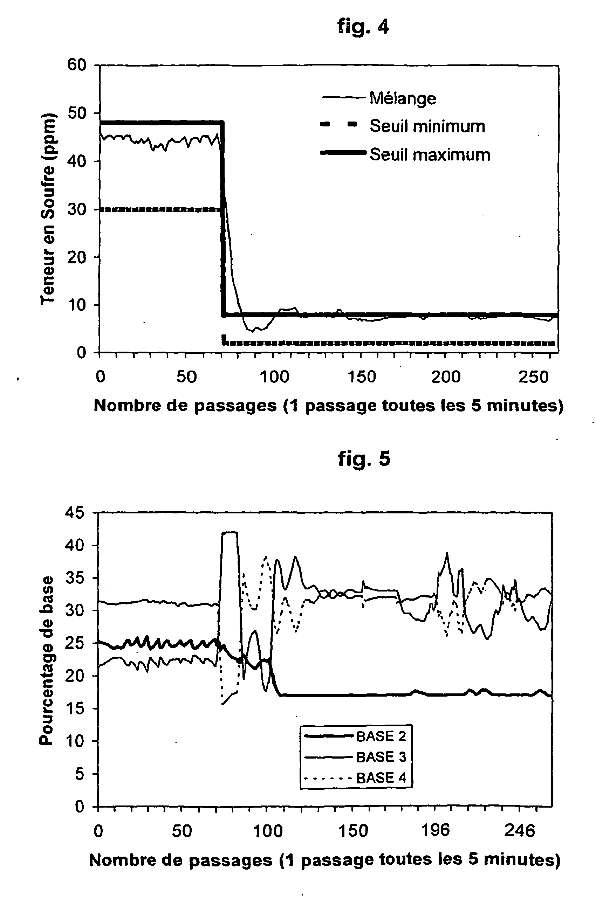

La figure 4 montre l'évolution de la teneur en soufre du mélange lors d'une transition rapide de marche de 50 ppm à 10 ppm en fonction d'un nombre de passages, chaque passage correspondant à 5 minutes. Chaque passage correspond à un nouveau lancement du dispositif selon l'invention (et donc à une nouvelle itération du procédé de contrôle selon l'invention), et notamment à l'émission d'une nouvelle recette calculée par le dispositif et appliquée sur les équipements.

Cette transition de consigne est en fait assurée par la modification des seuils, minimum et maximum, sachant que la régulation du soufre s'opère ici en zone, c'est-à-dire entre son minimum et son maximum : cette qualité de teneur en soufre n'a donc pas de cible fixe de type consigne, mais ce sont les contraintes de limites hautes et basses sur cette qualité de teneur en soufre qui sont ici prises en compte par l'optimiseur, et qui définissent un domaine d'évolution cible pour cette qualité.

On constatera que la teneur en soufre du mélange reste à tout moment proche de la valeur souhaitée, et suit rapidement la commande de diminution de la consigne, sans subir de grands écarts brusques de valeur.

L'estimateur selon l'invention permet d'assurer non seulement la régulation du soufre en sortie d'unité, mais également la régulation en zone de la densité, du point d'éclair, du trouble, du cétane, pourcent distillé (le point d'éclair est en contrainte minimale, le soufre et le trouble sont en contraintes maximales).

La figure 5 montre quant à elle l'évolution de la consommation des bases 2 à 4 utilisées au cours de la modification de la commande de teneur en soufre, les bases 1, 5 et 6 n'étant pas injectées pour la réalisation du mélange. Les profils de proportion calculés sur les constituants qui sont représentés sur la figure permettent d'obtenir les résultats souhaités sur les propriétés en sortie d'unité.

**Exemple 8 : Mélange essence en mode intégré avec fond de bac (sans pré-mélange)**

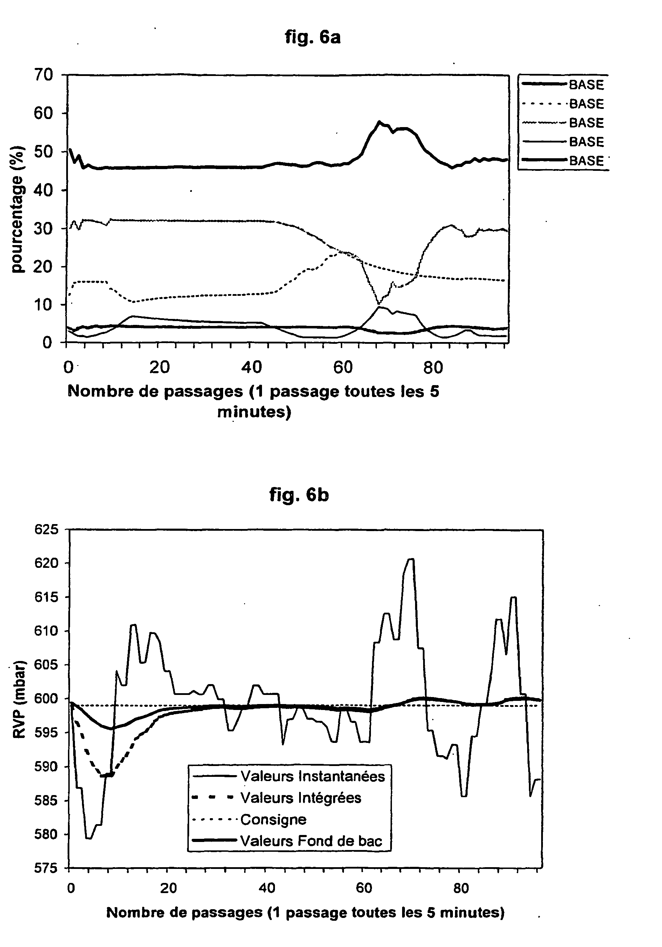

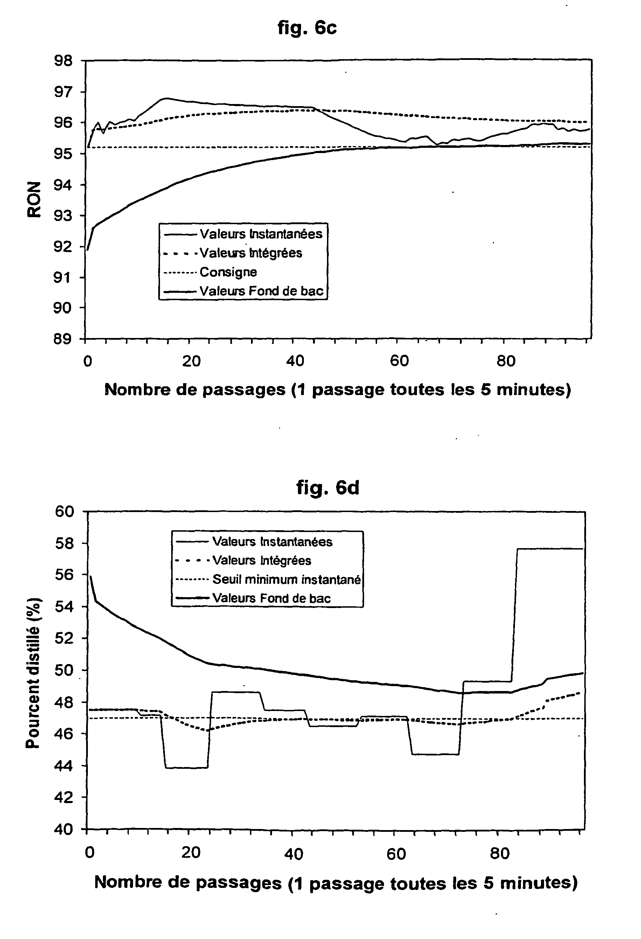

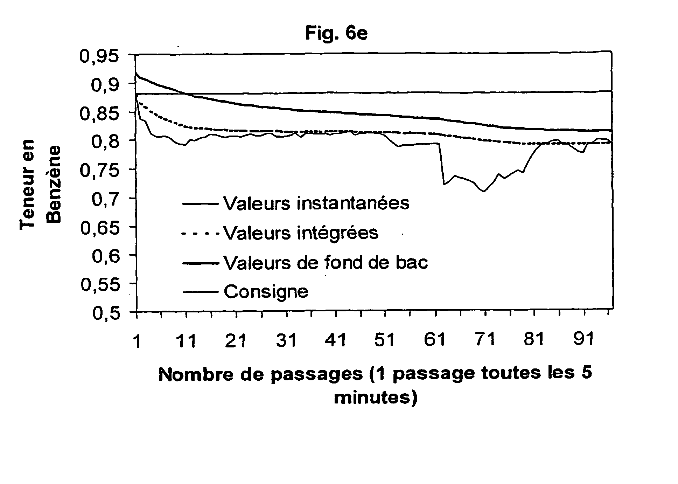

Les figures 6a-e montrent l'évolution dans le temps des ratio des bases (figure 6a), des régulations sur l'Indice d'octane Recherche (RON : Research Octane Number) et sur la tension de vapeur (RVP : Reid Vapor Pressure) (figures 6b et 6c respectivement), et de la surveillance en zone du pourcent distillé à 100˚C (figure 6d) et de la teneur en benzène (figure 6e).

Sur les figures 6a à 6c, sont représentés les valeurs intégrées dans le bac, les valeurs instantanées, ainsi que les consignes.

Les valeurs relatives à la teneur en benzène, au pourcent distillé à 100˚C, à l'indice d'octane moteur (MON), à l'indice d'octane Recherche (RON) et à la tension de vapeur (RVP) sont reportées dans le tableau suivant pour les différentes bases de constituant :

**Tableau 5 :** valeurs des propriétés des bases de l'exemple 8

| | Base 1 | Base 4 | Base 5 | Base 6 | Base 7 |
|---|---|---|---|---|---|
| **Teneur en Benzène (%)** | 1,050 | 0 | 1,130 | 0 | 0 |
| **Pourcent distillé à 100˚C (%)** | 64,9 | 29,6 | 6,9 | 100,0 | 125,0 |
| **MON** | 80,0 | 93,0 | 91,5 | 101,0 | 86,0 |

**EP 2 030 093 B1**

(suite)

|  | Base 1 | Base 4 | Base 5 | Base 6 | Base 7 |
|---|---|---|---|---|---|
| **RON** | 89,90 | 95,10 | 102,40 | 113,00 | 96,00 |
| **RVP** (mbar) | 565,89 | 454,00 | 186,37 | 551,90 | 4000,59 |

Cet exemple met en évidence le fonctionnement de la régulation avec compensation de fond de bac : Il y a convergence de deux qualités tension vapeur et indice d'octane, et maintien de deux autres qualités : pourcent distillé à 100˚C et teneur en benzène, à l'intérieur de leur domaine admissible.

Les valeurs minimales et maximales des qualités régulées et surveillées sont fournies sous la forme [mini, maxi] et sont les suivantes :

Teneur en Benzène (%) : [0, 0.95],
Pourcent distillé à 100˚C (%) : [47,70]
RON : [95.199,96.50] avec comme consigne la valeur minimale 95.199
RVP (mbar): [459.99, 599.86] avec une consigne égale à 598.86.

On peut constater vers le passage 70 dans la deuxième moitié du mélange une activité accrue sur les bases, car la qualité du pourcent distillé à 100˚C ayant atteint sa borne basse (mini), la recette est automatiquement modifiée pour faire remonter sa valeur et la maintenir au dessus de son seuil minimum, tout en maintenant les autres propriétés régulées et surveillées à leur cible.

Cet exemple illustre la capacité du dispositif à assurer un contrôle du mélange en mode intégré avec compensation de fond de bac, permettant de piloter à la fois des qualités régulées sur consigne fixe et des qualités surveillées dans leur zone minima/maxima.

**Exemple 9: Mélange gazole, régulation des dopes (sans pré-mélange)**

Figure 7

Cet exemple met en évidence le fonctionnement de la régulation par injection d'additifs ou dopes.

Deux propriétés : indice de cétane et filtrabilité sont ici régulées par dopes. Une troisième propriété (teneur en soufre) est régulée parallèlement par le mélange de deux bases, une troisième base étant bloquée sur un ratio fixe.

Le tableau suivant fournit les valeurs relatives à la teneur en soufre, la filtrabilité et l'indice de cétane des trois bases.

**Tableau 6 :** propriétés des bases de l'exemple 9

|  | Base 1 | Base 3 | Base bloquée |
|---|---|---|---|
| **Teneur en soufre (ppm)** | 30 | 246 | 3 |
| **Filtrabilité (˚C)** | 0 | -30 | -12 |
| **Indice de cétane** | 52 | 52 | $-1e^{+6}$ |

La base dite "bloquée" est injectée à un ratio constant de 1,5%.

La teneur en soufre est régulée sur une consigne à 45 ppm, la filtrabilité sur une consigne à -16˚C et l'indice de cétane à 52.

Tel que représenté sur les figures 7a-e :

La figure 7a montre qu'on baisse l'injection de pro-cétane, jusqu'à couper cette injection en milieu de mélange, pour faire baisser l'intégré cétane (figure 7d), qui rejoint doucement sa consigne et s'y maintient.

La figure 7b montre les injections de dope de filtrabilité, avec 3 pics correspondant aux petites oscillations sur la filtrabilité intégrée, constatées sur la figure 7e, ce qui dénote d'une régulation réglée de façon réactive.

La figure 7c donne les profils des bases utilisées pour la régulation du soufre: Ces profils sont assez stables, hormis un pic en milieu de mélange consécutif au pic constaté sur la mesure instantanée du soufre sur la figure 7f, lié à une perturbation ponctuelle.

Le soufre intégré est confondu avec sa consigne sur la figure 7f et n'a pas été affecté par la perturbation ponctuelle de milieu de mélange.

Cet exemple illustre la capacité du dispositif à assurer un contrôle en intégré mélange, simultané par les constituants de mélange et par injection de plusieurs additifs pour piloter différentes propriétés de mélange.

**Revendications**

1. Procédé de contrôle de l'élaboration d'un mélange M de n constituants, le procédé permettant de déterminer les proportions u des constituants entrant dans le mélange de manière à obtenir un nombre m de propriétés prédéterminées y du mélange dont les valeurs sont comprises entre des seuils minima et maxima prédéterminés et/ ou sont sensiblement égales, pour *m'* d'entre elles (*m'*≤*n*-1), à des valeurs cibles prédéterminées, **caractérisé en ce qu'**il comprend les étapes suivantes :

   (i) à un instant t=0,

      (1) on détermine une matrice B représentant un nombre m de propriétés y des n constituants;
      (2) on détermine une recette de référence $\overline{u}$ à partir des seuils minima et maxima prédéterminés et/ou des valeurs cibles prédéterminées, telles que les propriétés B$\overline{u}$ du mélange soient comprises entre lesdits seuils prédéterminés, et/ou pour m' d'entre elles, égales aux dites valeurs cibles prédéterminées ; $\overline{u}$, étant un vecteur de dimension n, représentant les proportions des différents constituants entrant dans la composition du mélange, avec $\sum_{i=1}^{n} \overline{u}_i = 1$ ;
      (3) on applique la recette $\overline{u}$ aux constituants afin d'élaborer un mélange M ;

   (ii) à l'instant t' = t+Δt,

      (1) on mesure les propriétés y $_{mes}$ du mélange M obtenu en appliquant la recette calculée à l'instant précédent,
      (2) on en déduit une matrice corrigée $\hat{B}$ représentant l'estimée des propriétés des constituants,
      (3) on détermine une nouvelle recette u, de sorte que les propriétés $\hat{B}$u du mélange soient comprises entre lesdits seuils prédéterminés, et/ou pour m' d'entre elles, égales aux dites valeurs cibles prédéterminées,
      (4) on applique cette nouvelle recette u aux constituants,

   (iii) à l'instant t'' = t' +Δt, on réitère les opérations (1) à (4) de l'étape (ii) précédente;
   (iv) l'étape (iii) est réitérée pendant toute la durée de l'élaboration du mélange.

2. Procédé de contrôle selon la revendication 1, dans lequel les propriétés y $_{mes}$ du mélange mesurées au cours de l'opération (1) de l'étape (ii) sont mesurées au moyen d'un processus continu de mesure sur le mélange élaboré.

3. Procédé de contrôle selon la revendication 1 ou 2, dans lequel, à un instant prédéterminé au cours de l'élaboration du mélange, on mesure une ou plusieurs propriétés des constituants et l'on met à jour la matrice B représentant les propriétés des constituants.

4. Procédé de contrôle selon l'une des revendications 1 à 3, **caractérisé en ce que**, au cours de l'opération (2) de l'étape (ii), la matrice corrigée $\hat{B}$ est déterminée en utilisant l'équation suivante :

$$\frac{d\hat{B}_j^t}{dt} = -\beta_j H u(y_j - y_j^{mes}), \quad (1)$$

Où

   ● la matrice H est une matrice symétrique définie positive ayant pour objectif d'assurer une normalisation de prise en compte de l'écart mesure-prédiction permettant le calcul d'écart de prédiction de qualité des constituants,

   ● $B_j^t$ est la transposée de B$_j$,
   ● $\beta_j$, réel strictement positif, est une constante de réglage du temps de convergence permettant de différencier la rapidité de convergence de l'estimation, propriété par propriété, *la valeur de* $\beta_j$, *exprimée en unités de temps pour chaque propriété étant égal de deux à quatre fois le retard de mesure de la propriété considérée*.

**5.** Procédé de contrôle selon l'une des revendications 1 à 4, pour l'élaboration d'un mélange de constituants, dans lequel au moins un pré-mélange d'au moins deux des constituants est réalisé avant la préparation du mélange, **caractérisé en ce que** la recette u déterminée au cours de l'opération (3) de l'étape (ii) prend en compte les retards dus aux volumes morts présents dans l'installation au niveau des zones de pré-mélange.

**6.** Procédé de contrôle selon la revendication 5, **caractérisé en ce que**, au cours de l'opération (2) de l'étape (ii), la matrice $\hat{B}$ est déterminée en utilisant l'équation suivante :

$$\frac{d\hat{B}_j^t}{dt} = -\beta_j HU(t)(y_j(t) - y_j^{mes}(t)), \quad (2)$$

avec $U(t) = (U_1(t),...U_n(t))^t$, à l'instant t , vecteur recette prenant en compte les volumes mort.

et $y(t) = \sum_{i=1}^{n} U_i(t)b_i$ , , $b_i$ étant le vecteur des propriétés du constituant i.

**7.** Procédé de contrôle selon la revendication 6, **caractérisé en ce que** les grandeurs de commande et de sortie entrant dans cette équation sont synchronisées pour tenir compte du retard de pré-mélange et du retard de mesure.

**8.** Procédé de contrôle selon l'une des revendications 1 à 7, **caractérisé en ce que** la recette u déterminée à la sous étape (3) de l'étape (ii) est obtenue au moyen d'un procédé d'optimisation comprenant les étapes suivantes :

(a) - déterminer la solution d'un problème de régulation complet P0, cette solution consistant en une recette u optimisée prenant en compte des contraintes sur les proportions des constituants et des contraintes sur les propriétés du mélange,

- si le problème de régulation complet P0 est solvable numériquement, on applique la recette u, solution de P0,

(b) - si le problème de régulation complet P0 n'est pas solvable numériquement, déterminer une recette u pour laquelle un problème de régulation minimal P1 est résolu théoriquement, qui ne prend en compte que des contraintes du problème P0 définies comme prioritaires, ce problème P1 met en oeuvre une succession de problèmes d'optimisation, normalement faisables, dont les critères consistent à pénaliser la violation desdites contraintes prioritaires, afin de définir de nouvelles valeurs atteignables pour ces contraintes prioritaires,

(c) - si le problème de régulation minimal P1 est solvable numériquement, déterminer une recette u pour laquelle un problème de régulation P2 est résolu théoriquement, qui prend en compte lesdites nouvelles valeurs atteignables des contraintes prioritaires du problème P0 ainsi que des contraintes non prioritaires du problème P0, ce problème P2 met en oeuvre un problème d'optimisation dont les critères consistent à pénaliser la violation desdites contraintes non prioritaires, afin de définir de nouvelles valeurs atteignables pour ces contraintes non prioritaires,

- si le problème de régulation minimal P1 n'est pas solvable numériquement, on applique la recette u actuelle,

(d) - si le problème de régulation P2 est solvable numériquement, déterminer une recette u pour laquelle un problème de régulation P3 est résolu théoriquement, qui prend en compte lesdites nouvelles valeurs atteignables des contraintes prioritaires du problème P0 obtenues à l'étape (b), lesdites nouvelles valeurs atteignables des contraintes non prioritaires obtenues à l'étape (c), ainsi que toutes les autres contraintes non prioritaires du problème P0 et non traitées par les problèmes P1 et P2, ce problème P3 met en oeuvre une succession de problèmes d'optimisation, normalement faisables, dont les critères consistent à pénaliser la violation desdites autres contraintes non prioritaires, afin de définir de nouvelles valeurs atteignables pour ces autres contraintes non prioritaires,

- si le problème de régulation P2 n'est pas solvable <u>numériquement</u>, on applique la recette obtenue par le problème P1,

(e) si le problème de régulation P3 est solvable <u>numériquement</u>, la recette appliquée est la solution du problème P3, sinon, la recette est la solution du problème P2<u>.</u>

**9.** <u>Procédé de contrôler selon la revendication 8, **caractérisé en ce que**</u> , ce procédé comprend une étape supplémentaire au cours de laquelle, si le problème de régulation précédent P3 est solvable <u>numériquement</u>, on détermine une recette u pour laquelle le problème de régulation P0 est résolu <u>numériquement</u> en prenant en compte lesdites nouvelles valeurs atteignables déterminées lors des étapes (b), (c), (d).

**10.** Procédé de contrôle selon la revendication 8 <u>ou 9</u>, **caractérisé en ce que** les contraintes prioritaires prises en compte pour la résolution du problème P1 sont des contraintes sur les proportions des constituants et des contraintes sur les propriétés du mélange.

**11.** Procédé de contrôle selon l'une des revendications 1 à <u>10</u>, destiné à une installation de préparation d'un mélange de n constituants et d'additifs, **caractérisé en ce que**, pour une propriété j du mélange sur lequel influe l'additif, le modèle de commande prend en compte l'effet d de l'ajout d'additif au cours des opérations (2) et (3) de l'étape (ii) selon : $y_j = \hat{B}_j u + d$.

**12.** Dispositif d'élaboration et de contrôle d'un mélange de constituants, comprenant des voies de transport (4, 5, 6) des constituants (1, 2, 3) à mélanger vers une voie principale (7) reliée à l'emplacement (9) de réception du mélange, des moyens (10) pour commander les débits des constituants sur chaque voie de transport, des moyens (11) de mesure en continu sur la voie principale des paramètres représentatifs du mélange en cours d'élaboration, et des moyens de calcul (12) des proportions des différents constituants entrant dans le mélange, **caractérisé en ce qu'**il comprend un estimateur (13) relié aux moyens de calcul, l'estimateur comprenant des moyens programmés pour produire une estimation des propriétés des constituants en utilisant les mesures des propriétés du mélange mesurées par les moyens de mesure (11), les moyens de calcul comprenant des moyens programmés pour calculer au moyen de cette estimation les proportions des différents constituants entrant dans le mélange afin d'obtenir un mélange comportant des propriétés pré-déterminées, l'estimateur (13) <u>comprenant</u> des moyens programmés pour mettre en oeuvre les opérations (1) et (2) des étapes (i) et (ii) du procédé selon l'une des revendications 1 à 4.

**13.** Dispositif selon la revendication <u>12</u>, **caractérisé en ce que** l'estimateur (13) comprend des moyens de synchronisation programmés pour prendre en compte les retards dus aux volumes morts au niveau de zones de pré-mélange d'au moins deux constituants du mélange.

**14.** Dispositif selon la revendication <u>12</u>, **caractérisé en ce que** l'estimateur (13) comprend des moyens de synchronisation programmés pour prendre en compte les retards dus aux volumes morts au niveau de plusieurs étages, au moins un étage étant constitué d'une ou plusieurs zones de pré-mélange d'au moins deux constituants du mélange.

**15.** Dispositif selon la revendication <u>13</u> ou <u>14</u>, **caractérisé en ce que** les moyens de synchronisation sont programmés pour mettre en oeuvre l'opération (2) de l'étape (ii) du procédé selon la revendication 6.

**16.** Dispositif selon l'une des revendications <u>12</u> à <u>15</u>, **caractérisé en ce qu'**il comprend un optimiseur (14) relié aux moyens de calcul (12) et à un moyen de stockage (15) d'objectifs de mélange, l'optimiseur comprenant des moyens programmés pour optimiser la recette u des proportions des constituants déterminée par les moyens de calcul (12) en fonction d'objectifs de mélange stockés dans ledit moyen de stockage (15), notamment l'optimiseur (14) comprend des moyens programmés pour mettre en oeuvre le procédé d'optimisation du procédé de contrôle selon l'une des revendications 8 à 10.

**17.** Dispositif selon la revendication <u>16</u>, **caractérisé en ce qu'**il comprend au moins un bac (16) d'additif relié par une voie de transport (17) à la voie principale (7), en aval de la zone de mélange des constituants (1, 2, 3), un moyen de commande (10) du débit d'additif associé au bac (16) prévu sur la voie de transport (17), et un contrôleur d'injection d'additif (18) relié audit moyen de commande (10), à l'optimiseur (14) et au moyen de stockage d'objectifs de mélange (15), le contrôleur d'injection d'additif (18) étant apte, pour une propriété j du mélange sur lequel influe un additif, à optimiser la proportion de l'additif afin de réguler ladite propriété j correspondante du mélange en tenant compte d'une cible fournie par le moyen de stockage d'objectifs de mélange.

**Claims**

1. Method for controlling the production of a mixture M of n constituents, the method making it possible to determine the proportions u of the constituents involved in the mixture so as to obtain a number m of predetermined properties y of the mixture, the values of which lie between predetermined minimum and maximum thresholds and/or, for *m'* of them (where *m'≤n*-1), are substantially equal to predetermined target values, **characterized in that** it comprises the following steps:

   (i) at time t = 0:

      (1) a matrix B representing a number m of properties y of the n constituents is determined,
      (2) a reference recipe $\bar{u}$ is determined from the predetermined minimum and maximum thresholds and/or from the predetermined target values, such that the properties $B\bar{u}$ of the mixture lie between said predetermined thresholds and/or, for m' of them, are equal to said predetermined target values, $\bar{u}$, being a vector of dimension n, representing the proportions of the various constituents involved in the composition of the mixture, where $\sum_{i=1}^{n} \bar{u}_i = 1$,
      (3) the recipe $\bar{u}$ is applied to the constituents so as to produce a mixture M;

   (ii) at time t' = t+Δt:

      (1) the properties $y_{mes}$ of the mixture M obtained by applying the recipe calculated at the previous time are measured,
      (2) a corrected matrix B, representing the estimate of the properties of the constituents, is deduced therefrom,
      (3) a new recipe u is determined in such a way that the properties $\hat{B}u$ of the mixture lie between said predetermined thresholds and/or, for m' of them, are equal to said predetermined target values,
      (4) this new recipe u is applied to the constituents;

   (iii) at time t" = t'+Δt, operations (1) to (4) of the preceding step (ii) are repeated; and
   (iv) step (iii) is repeated throughout the duration of production of the mixture.

2. Control method according to Claim 1, in which the properties $y_{mes}$ of the mixture that are measured during operation (1) of step (ii) are measured by means of a continuous measurement procedure on the mixture produced.

3. Control method according to Claim 1 or 2, in which, at a predetermined time during the production of the mixture, one or more properties of the constituents are measured and the matrix B representing the properties of the constituents is updated.

4. Control method according to one of Claims 1 to 3, **characterized in that**, during operation (2) of step (ii), the corrected matrix $\hat{B}$ is determined using the following equation:

$$\frac{d\hat{B}_j^t}{dt} = -\beta_j Hu(y_j - y_j^{mes}), \quad (1)$$

   where

   ● the matrix H is a positive definite symmetric matrix having the objective of ensuring normalization taking into account the measurement-prediction deviation, allowing constituent quality prediction deviation calculation;

   ● $B_j^t$ is the transpose of $B_j$ and

   ● $\beta_j$, a strictly positive real number, is a constant for setting the convergence time, allowing the rate of convergence of the estimate to be differentiated property by property, the value $\beta_j$, expressed in time units for each property, being equal to two to four times the measurement delay of the property considered.

5. Control method according to one of Claims 1 to 4, for the production of a mixture of constituents, in which at least one premix of at least two of the constituents is produced before production of the mixture, **characterized in that** the recipe u determined during operation (3) of step (ii) takes into account the delays due to the dead volumes present in the plant in the premixing zones.

6. Control method according to Claim 5, **characterized in that**, during operation (2) of step (ii), the matrix $\hat{B}$ is determined using the following equation:

$$\frac{d\hat{B}_j^t}{dt} = -\beta_j HU(t)(y_j(t) - y_j^{mes}(t)), \quad (2)$$

where $U(t) = (U_1(t),...U_n(t))^t$, at time t, the recipe vector taking into account the dead volumes, n

and $y(t) = \sum_{i=1}^{n} U_i(t)b_i$ , $b_i$ being the vector of the properties of constituent i.

7. Control method according to Claim 6, **characterized in that** the control and output quantities involved in this equation are synchronized in order to take into account the premixing delay and the measurement delay.

8. Control method according to one of Claims 1 to 7, **characterized in that** the recipe u determined in substep (3) of step (ii) is determined by means of an optimization procedure comprising the following steps:

(a) - determination of the solution of a complete regulation problem P0, this solution consisting of an optimized recipe u taking into account the constraints on the proportions of the constituents and the constraints on the properties of the mixture,

- if the complete regulation problem P0 is numerically solvable, application of the recipe u - solution of P0;

(b) - if the complete regulation problem P0 is not numerically solvable, determination of a recipe u for which a minimal regulation problem P1 is theorically solved, which takes into account only the constraints on the problem P0 that are defined as priority constraints; this problem P1 involves a succession of normally feasible optimization problems, the criteria of which consist in penalizing the violation of said priority constraints so as to define achievable new values for these priority constraints;

(c) - if the minimal regulation problem P1 is numerically solvable, determination of a recipe u for which a regulation problem P2 is theorically solved, which takes into account said achievable new values of the priority constraints of the problem P0 and also the non-priority constraints of the problem P0; this problem P2 involves an optimization problem, the criteria of which consist in penalizing the violation of said non-priority constraints so as to define achievable new values for these non-priority constraints,

- if the minimal regulation problem P1 is not numerically solvable, application of the current recipe u;

(d) - if the regulation problem P2 is numerically solvable, determination of a recipe u for which a regulation problem P3 is theorically solved, which takes into account said achievable new values of the priority constraints of the problem P0 that were obtained in step (b), said achievable new values of the non-priority constraints obtained in step (c) and also all the other non-priority constraints of the problem P0 that are not treated by the problems P1 and P2; this problem P3 involves a succession of normally feasible optimization problems, the criteria of which consist in penalizing the violation of said other non-priority constraints so as to define achievable new values for these other non-priority constraints,

- if the regulation problem P2 is not numerically solvable, application of the recipe obtained by the problem P1; and

(e) if the regulation problem P3 is numerically solvable, the applied recipe is the solution of the problem P3, otherwise the recipe is the solution of the problem P2.

9. Control method according to Claim 8, **characterized in that** this method comprises an additional step during which, if the previous regulation problem P3 is numerically solvable, a recipe u is determined for which the regulation problem P0 is numerically solved taking into account said achievable new values determined during steps (b), (c) and (d).

10. Control method according to Claim 8 or 9, **characterized in that** the priority constraints taken into account for solving the problem P1 are constraints on the proportions of the constituents and constraints on the properties of the mixture.

11. Control method according to one of Claims 1 to 10, intended for a plant for producing a mixture of n constituents and of additives, **characterized in that**, for a property j of the mixture on which the additive has an influence, the control model takes into account the effect d of the additive addition during operations (2) and (3) of step (ii) according to: $y_j = \hat{B}_j u + d$.

12. System for producing and controlling a mixture of constituents, comprising transport channels (4, 5, 6) for transporting the constituents (1, 2, 3) to be mixed into a main channel (7) connected to the place (9) for receiving the mixture, means (10) for controlling the flow rates of the constituents in each transport channel, means (11) for continuously measuring, in the main channel, representative parameters of the mixture being produced, and means (12) for calculating the proportions of the various constituents involved in the mixture, **characterized in that** it includes an estimator (13) connected to the calculation means, the estimator comprising programmed means for producing an estimate of the properties of the constituents using the measurements of the properties of the mixture that are measured by the measurement means (11), the calculation means comprising programmed means for calculating, by means of this estimate, the proportions of the various constituents involved in the mixture so as to obtain a mixture having predetermined properties, the estimator (13) comprising programmed means for implementing operations (1) and (2) of steps (i) and (ii) of the method according to one of Claims 1 to 4.

13. System according to Claim 12, **characterized in that** the estimator (13) includes programmed synchronization means for taking into account the delays due to the dead volumes in the zones for premixing at least two constituents of the mixture.

14. System according to Claim 12, **characterized in that** the estimator (13) includes programmed synchronization means for taking into account the delays due to the dead volumes in various stages, at least one stage consisting of one or more zones for premixing at least two constituents of the mixture.

15. System according to Claim 13 or 14, **characterized in that** the synchronization means are programmed to implement operation (2) of step (ii) of the method according to Claim 6.

16. System according to one of Claims 12 to 15, **characterized in that** it includes an optimizer (14) connected to the calculation means (12) and to a mixture-objectives storage means (15), the optimizer including programmed means for optimizing the recipe u of the proportions of the constituents and said recipe being determined by the calculation means (12) as a function of the mixture objectives stored in said storage means (15), in particular the optimizer (14) includes programmed means for implementing the optimization procedure of the control method according to one of Claims 8 to 10.

17. System according to Claim 16, **characterized in that** it includes at least one additive tank (16) connected via a transport channel (17) to the main channel (7), downstream of the zone for mixing the constituents (1, 2, 3), a means (10) for controlling the additive flow rate associated with the tank (16) provided in the transport channel (17), and an additive injection controller (18) connected to said control means (10), to the optimizer (14) and to the mixture-objectives storage means (15), the additive injection controller (18) being capable, for a property j of the mixture on which an additive has an influence, of optimizing the proportion of the additive so as to regulate said corresponding property j of the mixture, taking into account a target supplied by the mixture-objectives storage means.

**Patentansprüche**

1. Verfahren zum Steuern des Erstellens einer Mischung M aus n Komponenten, wobei das Verfahren es ermöglicht, die Anteile u der Komponenten, die in die Mischung eingehen, so zu bestimmen, dass eine Anzahl m vorbestimmter Eigenschaften y der Mischung gewonnen wird, deren Werte zwischen einer vorbestimmten unteren und oberen Schwelle liegen und/oder die für m' von ihnen (m' ≤ n-1) im Wesentlichen gleich vorbestimmten Zielwerten sind,

**dadurch gekennzeichnet, dass** es die folgenden Schritte enthält:

(i) zu einem Zeitpunkt t=0:

(1) wird eine Matrix B bestimmt, die eine Anzahl m von Eigenschaften y der n Komponenten darstellt,
(2) wird ein Referenzrezept $\overline{u}$ ausgehend von der vorbestimmten unteren und oberen Schwelle und/oder der vorbestimmten Zielwerte so bestimmt, dass die Eigenschaften Bü der Mischung zwischen den vorbestimmten Schwellen liegen und/oder für m' von ihnen gleich den vorbestimmten Zielwerten sind, wobei $\overline{u}$ ein Vektor der Dimension n ist und die Anteile der verschiedenen Komponenten darstellt, die in die Zusammenset-zung der Mischung eingehen, mit $\sum_{i=1}^{n} \overline{u_i} = 1$ ,

(3) wird das Rezept $\overline{u}$ auf die Komponenten angewendet, um eine Mischung M zu erstellen,

(ii) zu einem Zeitpunkt t' = t + $\Delta$t:

(1) werden die Eigenschaften $y_{mes}$ der Mischung M gemessen, die durch Anwenden des in dem vorigen Zeitpunkt berechneten Rezepts gewonnen wird,
(2) wird eine korrigierte Matrix B abgeleitet, die die Abschätzung der Eigenschaften der Komponenten darstellt,
(3) wird ein neues Rezept u so bestimmt, dass die Eigenschaften $\hat{B}$ u der Mischung zwischen den vorbestimmten Schwellen liegen und/oder für m' von ihnen gleich den vorbestimmten Zielwerten sind,
(4) wird das neue Rezept u auf die Komponenten angewendet,

(iii) zu einem Zeitpunkt t" = t' + $\Delta$t werden die Vorgänge (1) bis (4) des vorherigen Schritts (ii) wiederholt,
(iv) während der gesamten Dauer des Erstellens der Mischung wird der Schritt (iii) wiederholt.

**2.** Steuerverfahren gemäß Anspruch 1, bei dem die Eigenschaften $y_{mes}$ der Mischung, die im Verlauf des Vorgangs (1) des Schritts (ii) gemessen werden, mittels eines kontinuierlichen Messverfahrens an der Mischung an der erstellten Mischung gemessen werden.

**3.** Steuerverfahren gemäß Anspruch 1 oder 2, bei dem zu einem vorbestimmten Zeitpunkt im Verlauf des Erstellens der Mischung eine oder mehrere Eigenschaften der Komponenten gemessen werden und die Matrix B, die die Eigenschaften der Komponenten darstellt, aktualisiert wird.

**4.** Steuerverfahren gemäß einem der Ansprüche 1 bis 3, **dadurch gekennzeichnet, dass** im Verlauf des Vorgangs (2) des Schritts (ii) die korrigierte Matrix $\hat{B}$ unter Verwendung der folgenden Gleichung bestimmt wird:

$$\frac{d\hat{B}_j^t}{dt} = -\beta_j Hu\left(y_j - y_j^{mes}\right) \qquad (1) \text{ ,}$$

wobei die Matrix H eine symmetrische, positiv definierte Matrix ist, die darauf abzielt, eine Normalisierung der Berücksichtigung der Abweichung zwischen Messung und Vorhersage sicherzustellen, was die Berechnung der Abweichung der Vorhersage der Qualität der Komponenten ermöglicht,
$B_j^t$ die Transponierte von B ist
$\beta_j$ streng positiv reell eine Konstante der Einstellung der Konvergenzzeit ist, die es ermöglicht, die Konvergenzgeschwindigkeit der Abschätzung für jede Eigenschaft zu differenzieren, wobei der Wert von $\beta_j$, ausgedrückt in Einheiten der Zeit für jede Eigenschaft, gleich dem Zwei- bis Vierfachen der Verzögerung der Messung der betrachteten Eigenschaft ist.

**5.** Steuerverfahren gemäß einem der Ansprüche 1 bis 4 für das Erstellen einer Mischung von Komponenten, wobei zumindest eine Vormischung aus zumindest zweien der Komponenten vor dem Herrichten der Mischung verwirklicht wird,
**dadurch gekennzeichnet, dass** das Rezept u, das im Verlauf des Vorgangs (3) des Schritts (ii) bestimmt wird, die Verzögerungen aufgrund der Totvolumina berücksichtigt, die in der Anlage im Bereich der Zonen der Vormischung vorhanden sind.

**6.** Steuerverfahren gemäß Anspruch 5, **dadurch gekennzeichnet, dass** im Verlauf des Vorgangs (2) des Schritts (ii) die Matrix $\hat{B}$ unter Verwendung der folgenden Gleichung bestimmt wird:

$$\frac{d\hat{B}_j^t}{dt} = -\beta_j HU(t)\left(y_j(t) - y_j^{mes}(t)\right) \qquad (2)\,,$$

wobei $U(t) = (U_1(t), \dots U_n(t))$ zum Zeitpunkt t der Rezeptvektor ist, der die Totvolumina berücksichtigt, und

$y(t) = \sum_{i=1}^{n} U_i(t)b_i$ ist, wobei bi der Vektor der Eigenschaften der Komponenten ist.

**7.** Steuerverfahren gemäß Anspruch 6, **dadurch gekennzeichnet, dass** die Größen der Steuerung und des Ausgangs, die in diese Gleichung eingehen, synchronisiert sind, um die Verzögerung der Vormischung und die Verzögerung der Messung zu berücksichtigen.

**8.** Steuerverfahren gemäß einem der Ansprüche 1 bis 7, **dadurch gekennzeichnet, dass** das Rezept u, das in dem Unterschritt (3) des Schritts (ii) bestimmt wird, gewonnen wird mittels eines Optimierungsverfahrens, das die folgenden Schritte enthält:

(a) - Bestimmen der Lösung eines vollständigen Einstellproblems P0, wobei diese Lösung in einem Rezept u besteht, das unter Berücksichtigung der Einschränkungen der Anteile der Komponenten und der Einschränkungen der Eigenschaften der Mischung optimiert ist,

  - wenn das vollständige Einstellproblem P0 numerisch lösbar ist, wird das Rezept u angewendet, die Lösung des vollständigen Einstellproblems P0,

(b) - wenn das vollständige Einstellproblem PO numerisch nicht lösbar ist, Bestimmen eines Rezepts u, für das ein minimales Einstellproblem PI theoretisch gelöst ist, das nur die Einschränkungen des Problems P0 berücksichtigt, die als vorrangig definiert sind, wobei dieses Problem PI eine Folge von normalerweise machbaren Optimierungsproblemen in die Tat umsetzt, deren Kriterien darin bestehen, die Verletzung dieser vorrangigen Einschränkungen zu bestrafen, um neue Werte zu definieren, die für diese vorrangigen Einschränkungen erreichbar sind,

(c) - wenn das minimale Einstellproblem P1 numerisch lösbar ist, Bestimmen eines Rezepts u, für das ein Einstellproblem P2 theoretisch gelöst ist, das diese neuen Werte, die aus den vorrangigen Einschränkungen des Problems P0 erreichbar sind, sowie nicht vorrangige Einschränkungen des Problems P0 berücksichtigt, wobei dieses Problem P2 ein Optimierungsproblem in die Tat umsetzt, dessen Kriterien darin bestehen, die Verletzung dieser nicht vorrangigen Einschränkungen zu bestrafen, um neue Werte zu definieren, die für diese nicht vorrangigen Einschränkungen erreichbar sind,

  - wenn das minimale Einstellproblem P1 numerisch nicht lösbar ist, wird das aktuelle Rezept u angewendet,

(d) - wenn das Einstellproblem P2 numerisch lösbar ist, Bestimmen eines Rezepts u, für das ein Einstellproblem P3 theoretisch gelöst ist, das die in Schritt (b) gewonnenen neuen Werte, die aus den vorrangigen Einschränkungen des Problems P0 erreichbar sind, die in Schritt (c) gewonnenen neuen Werte, die aus den nicht vorrangigen Einschränkungen des Problems P0 erreichbar sind, sowie alle anderen nicht vorrangigen Einschränkungen des Problems P0 berücksichtigt, die nicht durch die Probleme P1 und P2 behandelt sind, wobei dieses Problem P3 eine Folge von normalerweise machbaren Optimierungsproblemen in die Tat umsetzt, deren Kriterien darin bestehen, die Verletzung dieser anderen nicht vorrangigen Einschränkungen zu bestrafen, um neue Werte zu definieren, die für diese anderen nicht vorrangigen Einschränkungen erreichbar sind,

  - wenn das Einstellproblem P2 numerisch nicht lösbar ist, wird das durch das Problem P1 gewonnene Rezept u angewendet,

(e) wenn das Einstellproblem P3 numerisch lösbar ist, ist das angewendete Rezept die Lösung des Problems P3, wenn nicht, ist das angewendete Rezept die Lösung des Problems P2.

9. Steuerverfahren gemäß Anspruch 8, **dadurch gekennzeichnet, dass** das Verfahren einen ergänzenden Schritt enthält, in dessen Verlauf, wenn das vorige Einstellproblem P3 numerisch lösbar ist, unter Berücksichtigung der neuen erreichbaren Werte, die in den Schritten (b), (c), (d) bestimmt wurden, ein Rezept u bestimmt wird, für das das Einstellproblem P0 numerisch gelöst ist.

10. Steuerverfahren gemäß Anspruch 8 oder 9, **dadurch gekennzeichnet, dass** die vorrangigen Einschränkungen, die für die Lösung des Problems Pl berücksichtigt wurden, Einschränkungen der Anteile der Komponenten und der Einschränkungen der Eigenschaften der Mischung sind.

11. Steuerverfahren gemäß einem der Ansprüche 1 bis 10, das für eine Anlage zum Erstellen einer Mischung aus n Komponenten und aus Zusatzstoffen bestimmt ist, **dadurch gekennzeichnet, dass** für eine Eigenschaft j der Mischung, auf die der Zusatzstoff einwirkt, das Steuermodell die Wirkung der Zugabe des Zusatzstoffs im Verlauf der Vorgänge (2) und(3) des Schritts (ii) berücksichtigt gemäß: $y_j = \hat{B}_j u + d$.

12. Vorrichtung zum Erstellen und Steuern einer Mischung aus Komponenten, enthaltend:

    Transportwege (4, 5, 6) der zu mischenden Komponenten (1, 2, 3) zu einem Hauptweg (7), die mit dem Empfangsort (9) der Mischung verbunden ist,
    ein Mittel (10) zum Steuern der Durchflüsse der Komponenten in jedem Transportweg,
    ein Mittel (11) zum kontinuierlichen Messen repräsentativer Parameter der Mischung während des Erstellens an dem Hauptweg und
    ein Mittel (12) zum Berechnen der Anteile der verschiedenen Komponenten, die in die Mischung eingehen, **dadurch gekennzeichnet, dass**
    es einen Schätzer (13) enthält, der mit dem Berechnungsmittel verbunden ist, wobei der Schätzer ein programmiertes Mittel enthält zum Erstellen einer Abschätzung von Eigenschaften der Komponenten unter Verwendung der Messungen von Eigenschaften der Mischung, die durch das Messmittel (11) gemessen werden,
    wobei das Berechnungsmittel ein programmiertes Mittel enthält zum Berechnen mittels dieser Abschätzung der Anteile der verschiedenen Komponenten, die in die Mischung eingehen, um eine Mischung zu erzielen, die vorbestimmtte Eigenschaften aufweist,
    wobei der Schätzer (13) ein programmiertes Mittel enthält zum Durchführen der Vorgänge (1) und (2) der Schritte (i) und (ii) des Verfahrens gemäß einem der Ansprüche 1 bis 4.

13. Vorrichtung gemäß Anspruch 12, **dadurch gekennzeichnet, dass** der Schätzer (13) ein programmiertes Synchronisationsmittel enthält, um die Verzögerungen aufgrund der Totvolumina im Bereich von Zonen der Vormischung zumindest zweiter Komponenten der Mischung zu berücksichtigen.

14. Vorrichtung gemäß Anspruch 12, **dadurch gekennzeichnet, dass**, **dadurch gekennzeichnet, dass** der Schätzer (13) ein programmiertes Synchronisationsmittel enthält, um die Verzögerungen aufgrund der Totvolumina im Bereich mehrerer Stufen zu berücksichtigen, wobei zumindest eine Stufe gebildet ist aus einer oder mehreren Zonen der Vormischung zumindest zweiter Komponenten der Mischung.

15. Vorrichtung gemäß Anspruch 13 oder 14, **dadurch gekennzeichnet, dass** das Synchronisationsmittel programmiert ist zum Durchführen des Vorgangs (2) des Schritts (ii) gemäß Anspruch 6.

16. Vorrichtung gemäß einem der Ansprüche 12 bis 15, **dadurch gekennzeichnet, dass** sie einen Optimierer (14) enthält, der mit dem Berechnungsmittel (12) und einem Speichermittel (15) für Mischungsvorgaben verbunden ist, wobei der Optimierer ein programmiertes Mittel enthält zum Optimieren des Rezepts u der Anteile der Komponenten, das durch das Berechnungsmittel (12) bestimmt wird, abhängig von den Mischungsvorgaben, die in dem Speichermittel (15) gespeichert sind, wobei der Optimierer (14) insbesondere ein programmiertes Mittel enthält zum Durchführen des Optimierungsverfahrens des Steuerverfahrens gemäß einem der Ansprüche 8 bis 10.

17. Vorrichtung gemäß Anspruch 16, **dadurch gekennzeichnet, dass** sie enthält:

    zumindest einen Behälter (16) für Zusatzstoffe, der über einen Transportweg (17) stromabwärts der Zone des Mischens der Komponenten (1, 2, 3) mit dem Hauptweg (7) verbunden ist,

ein Steuermittel (10) für den Durchfluss des mit dem Behälter (16) assoziierten Zusatzstoffs, das an dem Transportweg (17) vorgesehen ist, und

eine Zusatzstoffeinspritzsteuerung (18), die mit dem Steuermittel (10), dem Optimierer (14) und dem Mischungsvorgabenspeichermittel (15) verbunden ist, wobei die Zusatzstoffeinspritzsteuerung (18) in der Lage ist, für eine Eigenschaft j der Mischung, auf die der Zusatzstoff einwirkt, den Anteil des Zusatzstoffs zu optimieren, um die entsprechende Eigenschaft j der Mischung einzustellen unter Berücksichtigung eines Ziels, das von dem Mischungsvorgabenspeichermittel geliefert wird.

EP 2 030 093 B1

Fig. 1

Fig. 2

Fig. 3

## fig. 4

## fig. 5

## fig. 6a

## fig. 6b

## fig. 6c

RON

Nombre de passages (1 passage toutes les 5 minutes)

— Valeurs Instantanées
- - - Valeurs Intégrées
········· Consigne
━━ Valeurs Fond de bac

## fig. 6d

Pourcent distillé (%)

Nombre de passages (1 passage toutes les 5 minutes)

— Valeurs Instantanées
- - - Valeurs Intégrées
········· Seuil minimum instantané
━━ Valeurs Fond de bac

**Fig. 6e**

Teneur en Benzène

Nombre de passages (1 passage toutes les 5 minutes)

—— Valeurs instantanées

- - - - Valeurs intégrées

—— Valeurs de fond de bac

—— Consigne

**Fig. 7a**

**Fig 7b**

**Fig 7c**

**Fig 7d**

**Fig 7e**

**Fig. 7f**

**EP 2 030 093 B1**

## RÉFÉRENCES CITÉES DANS LA DESCRIPTION

**Documents brevets cités dans la description**

- US 6159255 A1
- US 5430295 A1
- US 3473008 A1
- US 3385680 A